# EUROPÄISCHE PATENTANMELDUNG

(11) **EP 4 361 576 A1**
(43) Veröffentlichungstag der Anmeldung: **01.05.2024**
(21) Anmeldenummer: 23206456.8
(22) Anmeldetag: 27.10.2023
(51) Int. Cl.: G01F 11/26, A47J 31/40, G01F 13/00, G01F 11/24, G01F 11/22, G01F 11/10, G01F 3/24, G01F 1/00, G07F 13/02

(54) **DOSIERVORRICHTUNG ZUM ABMESSEN/PORTIONIEREN VON FLÜSSIGKEITEN, PULVERN UND GRANULATEN**

(30) Priorität: 27.10.2022 LU 502969
(71) Anmelder: Walther, Stefanie, 01705 Freital (DE)
(72) Erfinder: Walther, Stefanie, 01705 Freital (DE)
(74) Vertreter: Gruner, Leopold Joachim

(57) **Zusammenfassung**

Bei der vorliegenden Erfindung handelt es sich um eine Dosiervorrichtung für Substanzen wie Flüssigkeiten und/oder Pulver und/oder Granulate, welche derart eingerichtet ist, dass sie die abgegebene Menge der Substanz, insbesondere das abgegebene Volumen an Flüssigkeit und/oder Pulver und/oder Granulat, anzeigt. Darüber hinaus ist die erfindungsgemäße Dosiervorrichtung mit einer Recheneinheit (5) koppelbar, sodass sie durch Nutzereingaben an die Recheneinheit (5) steuerbar ist.

Die Erfindung betrifft auch ein System auf einer erfindungsgemäßen Dosiervorrichtung und wenigstens einem kippbaren Gefäß.

Weiterhin offenbart die vorliegende Erfindung ein Verfahren zum Dosieren von Flüssigkeiten und/oder Pulvern und/oder Granulaten unter Verwendung der vorliegenden Dosiervorrichtung, welches dadurch gekennzeichnet ist, dass der Dosiervorgang bei Erreichen der vorgegebenen Menge an Flüssigkeit und/oder Pulver und/oder Granulat automatisch beendbar ist.

## Beschreibung

### Technisches Gebiet

Das technische Gebiet der Erfindung betrifft das Portionieren und/oder Abmessen von Substanzen, insbesondere von Flüssigkeiten und/oder Pulvern und/oder Granulaten, insbesondere das Portionieren und/oder Abmessen von Flüssigkeiten und/oder Pulvern und/oder Granulaten kleiner bis mittlerer Mengen wie sie beispielsweise im privaten Haushalt üblich sind. Insbesondere handelt es sich bei den zu portionierenden Substanzen um in mittleren Gebinden aufbewahrte Substanzen, insbesondere Flüssigkeiten und/oder Pulver und/oder Granulate, insbesondere um in kippbaren Gefäßen aufbewahrte Flüssigkeiten und/oder Pulver und/oder Granulate, wobei die kippbaren Gefäße vorzugsweise eine definierte Öffnung umfassen, wobei die Öffnung insbesondere als Gießvorrichtung ausgebildet ist.

### Stand der Technik

Aus dem Stand der Technik ist die Anwendung von sogenannten Flaschenkopfdispensern aus vielen wirtschaftlichen Bereichen bekannt. So kommen auf einer Flasche befestigbare Portioniervorrichtungen bspw. in Laboren, der Gastronomie, medizinischen Einrichtungen oder auch im medizinischen Fachhandel zum Einsatz.

Die WO 2013/160225A1 offenbart eine Vorrichtung zum Portionieren von Flüssigkeiten welche als Flaschenkopfdispenser ausgeführt ist. Der Flaschenkopfdispenser eignet sich zur luftdichten Montage auf einem Gefäß, bevorzugt einer Flasche und ist derart ausgestaltet, dass er nach Gebrauch demontierbar ist. Die Vorrichtung ist zur Abgabe von präzise dosierbaren Mengen einer Flüssigkeit eingerichtet, wobei die Dosierung über einen verschiebbaren Regler für eine grobe Dosierung, oder einen Taster zum Feinjustieren des abzugebenden Volumens erfolgt. Die Flüssigkeit wird zum Portionieren in eine Dosierungskammer geleitet, welche eine feste maximale Menge an Flüssigkeit aufnehmen kann. Dabei handelt es sich in der Regel um eine Menge an Flüssigkeit, die deutlich kleiner ist als das Volumen des Gefäßes, in welchem sich die zu portionierende Flüssigkeit befindet. Zudem wird zum Dosieren ein Pumpprozess in Gang gesetzt, um die Flüssigkeit in die Dosierungskammer zu befördern. Das Portionieren und/oder Abmessen von Flüssigkeitsmengen, welche das Volumen der Dosierungskammer überschreiten, ist nachteilig nur durch mehrfaches Betätigen der Vorrichtung durchführbar.

In der DE 19841705 C1 wird ein Verfahren und eine Vorrichtung zum Portionieren von Flüssigkeiten offenbart, welche einen Flaschenkopfdispenser umfassen. Der Flaschenkopfdispenser ist derart ausgestaltet, dass er eine Vorportionierungskammer und eine Erfassungseinrichtung umfasst. Dabei ist die Vorportionierungskammer dazu ausgelegt, eine vordefinierte Menge an Flüssigkeit auszugeben. Die Erfassungseinrichtung basiert auf einer magnetisch-induktiven Erfassung von Flüssigkeit in der Vorportionierungskammer und ist dazu ausgelegt, einen Entnahmevorgang der vordefinierten Flüssigkeitsmenge zu erfassen und diesen über eine kontaktlose Datenübertragungsschnittstelle an eine Registriereinheit weiterzuleiten.

Die Vorrichtung und das Verfahren zielen dabei auf ein durch die Bauart des Flaschenkopfdispensers festgelegtes Volumen an Flüssigkeit ab, welches durch den Flaschenkopfdispenser abgegeben wird. Die abgegebenen Volumeneinheiten werden durch einen Sensor erfasst.

Weiterhin ist die in der DE 19841705 C1 offenbarte Erfindung lediglich für die Abgabe von definierten, diskreten Flüssigkeitsmengen und/oder -volumina ausgelegt, da das abgegebene Volumen baulich durch die Vorportionierungskammer vorgegeben ist. Aufgrund der Bauweise ist zudem lediglich ein Abmessen und/oder Portionieren von Flüssigkeiten realisierbar.

Der Flaschenkopfdispenser ist weiterhin für das Verwenden auf einer Flasche vorgesehen, wodurch eine Anwendung bspw. zum Portionieren von Flüssigkeiten aus einem Karton mit Drehverschluss nicht möglich ist.

Die US 2019/0101112 A1 offenbart einen tragbaren Lebensmittelbehälter und ein Verfahren zur Ausgabe von Lebensmitteln aus dem tragbaren Behälter. Der tragbare Lebensmittelbehälter umfasst einen tragbaren Behälter mit einem Reservoir, das Lebensmittel enthält, und einen Spender, der so konfiguriert ist, dass er das in dem Reservoir enthaltene Lebensmittel ausgibt. Eine Pumpe ist in dem Behälter angeordnet und so konfiguriert, dass sie das Lebensmittel aus dem Reservoir zu dem Spender befördert, wenn sie aktiviert wird, um das Lebensmittel durch den Spender auszugeben. Ein Steuergerät ist im Körper angeordnet und mit der Pumpe verbunden. Das Steuergerät kann so konfiguriert sein, dass es die Pumpe aktiviert, um eine vom Benutzer gewählte Menge des Lebensmittels aus dem Spender auszugeben.

In der US 2011/0180563 A1 wird eine Verschlusskappe zur Ausgießkontrolle offenbart, die mit einem Ausrichtungswinkelsensor ausgestattet ist. Wenn der Ausgießer an einer Alkoholflasche angebracht ist, bestimmt der Ausrichtungswinkelsensor den Winkel der Flasche in Bezug auf die Horizontale zu jedem Zeitpunkt, zu dem die abgegebene Substanz aus der Flasche gegossen wird. Diese Daten über die Dauer des Ausgießens bei verschiedenen Ausgießwinkeln können für einen gesamten Ausgießvorgang gespeichert werden, um die während des Vorgangs ausgegossene Flüssigkeitsmenge zu berechnen.

Die FR 3 028 944 A1 offenbart eine Vorrichtung zum Dosieren einer Flüssigkeitsmenge, die aus einem Behälter mit einer nach oben gerichteten Öffnung fließt, wenn der Behälter abgestellt wird. Die Vorrichtung ist fest mit der Öffnung des Behälters verbunden und umfasst ein Mittel zur Steuerung des Ausflusses einer bestimmten Flüssigkeitsmenge, wenn die Öffnung des Behälters nach unten gerichtet ist. Die Vorrichtung umfasst einen Positionssensor, der die Änderung der Position des Behälters erfasst und den Ausfluss der bestimmten Flüssigkeitsmenge auslöst, wenn die Öffnung des Behälters nach unten gerichtet ist. Auf diese Weise löst das einfache Kippen, das die Öffnung nach unten richtet, den Öffnungsmechanismus für den Ausfluss einer bestimmten Flüssigkeitsmenge aus, ohne dass ein Eingriff durch Drücken einer Taste zur Steuerung des Ausgießens erforderlich ist. Gemäß einer Weiterbildung zählt die Vorrichtung die Zeit, in der die Flüssigkeit fließt, um die auszugießende Menge zu bestimmen.

Die WO 2006/021039 A1 offenbart ein verbessertes Getränkekontrollsystem, das im Idealfall den genauen Verbrauch im Vergleich zu den tatsächlichen Einnahmen auf eine nicht störende und nicht aufdringliche Weise anzeigt. Dafür weist das System einen Ausgießer mit einer Getränkeausgabesteuerung mit einem Quetschventilmagneten zur Steuerung der Ausgabe eines Getränks mit einer Kappe mit einem Verschlusssystem zur lösbaren Befestigung der Kappe an einem Getränkebehälter auf. Ebenfalls wird ein System offenbart, das den Ausgießer mit einer eindeutigen Identifizierung umfasst und in der Lage ist, drahtlose Signale über die ausgegebene Getränkemenge an eine Basisstation zu senden, um eine persönliche Identifizierungseinheit, wie z. B. ein passives RFID-Etikett oder einen Strichcode, oder den Barkeeper, der das Getränk ausschenkt, zu identifizieren.

Die US 10 155 651 B2 offenbart ein Verfahren zur Ausgabe eines Getränks aus einer Flasche, bei dem eine Ausgabeberechtigungsnachricht von einer Steuereinheit an mindestens eine Serverschnittstelle, die von einem Getränkeserver getragen wird, und an einen an einer Flasche befestigten Ausgießer übermittelt wird, wobei die Ausgabeberechtigungsnachricht mindestens einen Ausgabebefehl enthält oder auslöst, und wobei die Ausgießer auf den Ausgabebefehl reagiert, indem er ein Ausgießventil öffnet, durch das ein Getränk aus der Flasche und aus dem Ausgießer fließt.

Die US 2020/0022519 A1 offenbart eine Vorrichtung und ein Verfahren zum Messen des Flüssigkeitsverbrauchs aus einem Behälter. Die Vorrichtung umfasst einen oder mehrere Näherungssensoren, die in oder neben einem Auslass des Behälters angeordnet sind und so konfiguriert sind, dass sie das Vorhandensein oder die Abwesenheit der Flüssigkeit in oder neben dem Auslass überwachen, sowie einen Winkelsensor zum Bestimmen eines ersten Winkels des Behälters, wenn die Flüssigkeit durch den Auslass zu fließen beginnt, und zum Bestimmen eines zweiten Winkels des Behälters, wenn die Flüssigkeit nicht mehr durch den Auslass fließt. Weiterhin umfasst die Vorrichtung einen Sender zum Übertragen von Daten von Näherungssensoren und Winkelsensoren. Die Daten dieser Sensoren werden an eine Rechen- und/oder Anzeigeeinheit übertragen, die Daten oder verarbeiteten Daten verwenden, um ein Volumen der Flüssigkeit, das durch den Auslass geflossen ist, zu berechnen oder anzuzeigen.

Die US 2 671 575 A offenbart eine Vorrichtung zum Lagern und Ausgeben von Getränkegrundstoffen, bei der das Problem des Verklumpens vollständig beseitigt wird, indem der gesamte Inhalt jedes Getränkegrundstoffmagazins in der Maschine jedes Mal umgewälzt wird, wenn ein Getränk aus der Maschine ausgegeben wird und, falls gewünscht, in regelmäßigen Abständen, auch wenn kein Getränk ausgegeben wird. Dadurch, dass der gesamte Inhalt der Getränkemagazine in der Maschine regelmäßig durchgeschüttelt wird, wird er in einer flockigen, pulverförmigen Form gehalten, die frei durch die Ausgabeventile fließt, von diesen genau dosiert wird und sich in der Mischkammer leicht auflöst, wenn sie mit heißem Wasser oder einer anderen Flüssigkeit vermischt wird.

Die US 3 920 149 A offenbart eine Vorrichtung und ein Verfahren zur Ausgabe eines Getränks oder einer Flüssigkeit aus einem Behälter, wie z.B. Spirituosen aus einer Flasche, wobei der Behälter mit einem normalerweise geschlossenen Ventil versehen ist, das abnehmbar an seinem Flüssigkeitsauslass angebracht ist. Die Vorrichtung und das Verfahren eignen sich zur Verwendung mit einem Spirituosenausgabesystem, das eine Reihe von Flaschen unterschiedlicher Arten und Qualitäten alkoholischer Getränke verwendet. In einem solchen System weist jedes Ventil ein Ventilelement auf, das als Reaktion auf ein Magnetfeld in eine offene Position bewegt werden kann, um die Abgabe von Flüssigkeit aus der entsprechenden Flasche zu ermöglichen. Ein rohrförmiges Ventilbetätigungselement ist so angeordnet, dass er das Ventil aufnimmt und ein Magnetfeld erzeugt, um das Ventil zu öffnen, wenn der Behälter umgedreht wird. Eine mit dem Betätigungselement gekoppelte Schaltung stellt sicher, dass das Ventil nur für eine vorbestimmte Zeitdauer geöffnet ist, so dass nur ein vorgewähltes Volumen der Flüssigkeit aus dem Behälter abgegeben wird.

### Aufgabe

Es ist also Aufgabe der Erfindung, eine Vorrichtung bereitzustellen, welche das flexible Portionieren und/oder Abmessen von Substanzen, insbesondere Flüssigkeiten und/oder Pulvern und/oder Granulaten ermöglicht, wobei die Menge an Substanz frei einstellbar und während des Portioniervorgangs ablesbar, bzw. auslesbar ist. Die Vorrichtung soll mit verschiedenen Gießvorrichtungen kompatibel eingerichtet sein, sodass aus einer Vielzahl von Gefäßen Substanzen, insbesondere Flüssigkeiten und/oder Pulver und/oder Granulate, abgemessen und/oder portioniert abgegeben werden können.

### Lösung

Die technische Aufgabe wird durch die vorliegende Erfindung gemäß Anspruch 1 gelöst. Weitere vorteilhafte Ausgestaltungen sind in den Unteransprüchen angegeben. Insbesondere wird die technische Aufgabe durch eine **Dosiervorrichtung** zum Abmessen/Portionieren von Flüssigkeiten, Pulvern und/oder Granulaten gelöst, welche die folgenden Komponenten umfasst:
einen Einlass, der als Aufsatz zum Befestigen der Vorrichtung am Auslass eines kippbaren Gefäßes ausgebildet ist, wobei das Gefäß ein Volumen einer zu portionierenden Substanz enthält, wobei der Aufsatz vorzugsweise derart ausgestaltet ist, dass die Dosiervorrichtung dicht mit dem Auslass des kippbaren Gefäßes verbindbar ist,
ein Messgerät für eine Ermittlung des Volumens der dieses Messgerät durchfließenden Substanz, wobei das Messgerät ein Durchflussmesser und/oder Durchflusszähler ist,
eine Anzeigeeinheit, wobei die Anzeigeeinheit derart eingerichtet ist, dass sie die Menge der das Messgerät durchfließenden zu portionierende Substanz, bevorzugt in einer gängigen Einheit, anzeigt. Die durch die Anzeigeeinheit angezeigte Menge ist dabei abhängig vom Volumen der das Messgerät durchflossenen abzumessenden Substanz. Bevorzugt zeigt die Anzeigeeinheit ein Volumen an,
einen Dosiervorrichtungsauslass, wobei der Dosiervorrichtungsauslass (2) aus mehreren gegeneinander verschiebbaren Segmenten, insbesondere aus zumindest drei gegeneinander verschiebbaren Segmenten, ausgebildet ist.

Dabei ist der Aufsatz zum Befestigen der Dosiervorrichtung am Auslass eines kippbaren Gefäßes austauschbar und/oder in der Größe variabel.

Im Sinne der Erfindung ist unter einem Aufsatz, welcher in der Größe variabel ist, zum einen ein Aufsatz zu verstehen, welcher direkt in der Form veränderlich ist, so dass er an die Größe bzw. an die Voraussetzungen des kippbaren Gerätes anpassbar ist, so kann beispielsweise sein Durchmesser veränderbar sein. Zum anderen wird darunter auch ein Aufsatz verstanden, bei dem wenigstens ein Anpassungsabschnitt bzw. ein Anpassungsbestandteil des Aufsatzes reversibel verbindbar mit dem weiteren Aufsatzabschnitt ausgestaltet ist, wobei der Anpassungsabschnitt durch einen anderen Anpassungsabschnitt, welcher gegenüber dem ersten Anpassungsabschnitt veränderte Abmessungen zum Anpassen an ein anderes kippbares Gefäß aufweist, austauschbar ausgebildet ist.

### Allgemeine Vorteile

Die vorliegende Erfindung ermöglicht vorteilhaft ein variables, fein einstellbares Portionieren und/oder Abmessen von Flüssigkeiten und/oder Pulvern und/oder Granulaten, wobei das Portionieren über eine Anzeige des Durchflusses in einer gängigen Einheit einfach für den Nutzer ablesbar ist. Das Portionieren erfordert keine Betätigung einer Pumpe, sondern wird direkt durch das Kippen des Gefäßes ausgelöst. Dadurch, dass die Dosiervorrichtung einen Aufsatz umfasst, der zum Befestigen der Vorrichtung am Auslass eines kippbaren Gefäßes geeignet und in der Größe variabel ist, ist die Dosiervorrichtung vorteilhaft für eine Vielzahl an Gefäßen verwendbar. Vorteilhaft erfolgt die Dosierung mittels der erfindungsgemäßen Dosiervorrichtung kontinuierlich bzw. quasi-kontinuierlich, da hier auf eine Vorportionierkammer verzichtet wird. Die Dosierung einer Substanz ist dabei sowohl das Abmessen, also das Messen und Anzeigen, der durchflossenen Substanz als auch das Portionieren, wenn nach einer bevorzugten Ausgestaltung die Dosiervorrichtung dazu eingerichtet ist, bei Erreichen einer festgelegten Menge den Durchfluss der Substanz zu stoppen. Dabei bedeutet quasi-kontinuierlich, dass das Mindestvolumen, welches erfassbar und anzeigbar ist, durch das Messgerät und die Anzeigeeinheit limitiert wird. Bei einem Flügelradmessgerät würde beispielsweise die Größe der durch die Flügelräder aufgespannten Kammern eine gewisse Limitierung darstellen.

### Ausführliche Beschreibung der Erfindung

### Einlass der Dosiervorrichtung

Die Dosiervorrichtung umfasst einen Einlass zum Einlassen von Flüssigkeiten und/oder Pulvern und/oder Granulaten, welcher derart ausgestaltet ist, dass er als Aufsatz zum Befestigen der Vorrichtung am Auslass eines kippbaren Gefäßes eingerichtet ist. Dabei ist der Einlass vorzugsweise derart ausgestaltet, dass er dicht mit dem Auslass des kippbaren Gefäßes verbindbar ist. Dicht bedeutet im Sinne der Erfindung, dass der Einlass derart mit dem Auslass des kippbaren Gefäßes abschließt, dass bei einem Austauschen von Flüssigkeiten und/oder Pulvern und/oder Granulaten zwischen Gefäß und Dosiervorrichtung kaum ein Anteil, vorzugsweise kein Part bzw. Anteil der ausgetauschten Materie bzw. der ausgetauschten Substanz, insbesondere der Flüssigkeit und/oder des Pulvers und/oder des Granulats, nach außen, also außerhalb der Dosiervorrichtung, dringt. Kaum ein Anteil ist dabei maximal 1 % der durchfließenden Substanz, vorzugsweise maximal 1 ‰, der durchfließenden Substanz, bevorzugt maximal 1 ml der durchfließenden Substanz. Zudem bedeutet dicht im Sinne der Erfindung auch, dass bspw. der Einlass der Dosiervorrichtung derart mit dem Auslass des kippbaren Gefäßes verbunden ist, dass er sich beim Kippen des kippbaren Gefäßes nicht von diesem löst. Vorzugsweise ist der Einlass so ausgebildet, dass er derart am Auslass eines kippbaren Gefäßes anordenbar bzw. mit diesem verbindbar ist, dass zwischen dem Auslass des Gefäßes, auch als Gefäßauslass bezeichnet, und dem Einlass der Dosiervorrichtung, eine hermetische Abdichtung vorliegt, sodass ein Austreten der Substanz verhindert wird. Eine Dichtigkeit bezieht sich hier dabei immer auf Kräfte, welche durch ein Gießen bzw. Schütten der Substanz verursacht werden.

Nach einer Ausgestaltung ist der Einlass derart ausgestaltet, dass er durch seine Form dicht mit dem Auslass des kippbaren Gefäßes abschließt. Beispielsweise handelt es sich bei dem Einlass um ein geschliffenes Element, bspw. ein Glaselement oder ein Metallelement, welches formschlüssig und/oder kraftschlüssig mit dem Auslass des kippbaren Gefäßes reversibel verbindbar ist. Beispielsweise weist der Einsatz, vorzugsweise das geschliffene Element, ein Gewinde auf, welches durch Aufschrauben mit dem kippbaren Gefäß verbindbar ist. Vorteilhaft kann so eine dichte Verbindung zwischen dem kippbaren Gefäß und der Dosiervorrichtung hergestellt werden, welche stabil bestehen bleibt, auch unter Einwirken der Gravitationskräfte, welche bei Kippen des Gefäßes auf die Dosiervorrichtung einwirken.

Nach einer weiteren Ausgestaltungsform ist der Einlass aus einem flexiblen Material, bspw. elastisch verformbaren Material aus der Gruppe der Kunststoffe, vorzugsweise der Elastomere, insbesondere Silikone, wie beispielsweise Silikonelastomere, Gummis und Kautschuke, oder aus Kork gefertigt. Der elastisch verformbare Einlass ist derart ausgestaltet, dass er eine reversible kraftschlüssige Verbindung, insbesondere eine Pressverbindung mit dem Gefäßauslass des kippbaren Gefäßes bildet. Ein elastisch verformbarer Einlass weißt den Vorteil auf, dass er ein Verbinden des Einlasses der Dosiervorrichtung mit dem Gefäßauslass eines kippbaren Gefäßes auch dann ermöglicht, wenn die Abmessungen des Gefäßauslasses von den normierten Abmessungen leicht abweichen. Zudem ist die Verbindung zwischen dem Aufsatz der Dosiervorrichtung und dem Gefäßauslass des kippbaren Gefäßes leicht trennbar.

Nach einer weiteren Ausführungsform ist der der Dosiervorrichtungsauslass oder der Einlass (1) der Dosiervorrichtung zumindest abschnittsweise aus einem formbaren Material, bspw. einem Elastomer, gebildet.

Nach einer bevorzugten Ausgestaltung der Dosiervorrichtung, weist der Aufsatz zum Befestigen der Dosiervorrichtung am Auslass eines kippbaren Gefäßes einen runden Querschnitt auf. Der Querschnitt ist so ausgestaltet, dass er sich dabei trichterförmig in der Richtung, welche bei bestimmungsgemäßem Gebrauch dem kippbaren Gefäß zugewandt ist, verjüngt. Bei Verwendung eines elastischen, also verformbaren Materials, vorzugsweise einem Elastomer oder einem Silikon, können verschiedene Größen eines Auslasses eines kippbaren Gefäßes mit dem Aufsatz eine dichte Verbindung bilden. Vorzugsweise weist der Aufsatz Bereiche mit stärkerer und mit weniger starker Verformbarkeit auf. Somit kann der Aufsatz über einen Auslass eines kippbaren Gefäßes gestülpt werden und es entsteht eine dichte Verbindung, was vorteilhaft ein flexibles Abmessen und/oder Portionieren ermöglicht. Besonders vorteilhaft ist der speziell entwickelte Aufsatz so ausgestaltet, dass dieser für eine hermetische Verbindung mit dem Auslass des kippbaren Gefäßes sorgt, wodurch mögliche Leckagen verhindert werden und dadurch eine kontrollierte Abgabe der Substanz gewährleistet. Die hermetische Verbindung zwischen der Dosiervorrichtung und dem Auslass des kippbaren Behälters stellt sicher, dass die Substanz nicht kontaminiert wird und die Reinheit und Qualität der dosierten Substanz erhalten bleibt.

Gemäß einer Ausführungsform umfasst die Dosiervorrichtung zum Abmessen/Dosieren/Portionieren von Substanzen, vorzugsweise Flüssigkeiten und/oder Pulvern und/oder Granulaten, als Komponenten einen Einlass (1), der als Aufsatz zum Befestigen der Dosiervorrichtung an einem Auslass eines eine zu portionierende Substanz enthaltenden, kippbaren Gefäßes (6) ausgebildet ist, wobei das kippbare Gefäß (6) ein Volumen einer zu portionierenden Substanz enthält, wobei der Aufsatz derart ausgestaltet ist, dass die Dosiervorrichtung dicht mit dem Auslass des kippbaren Gefäßes (6) verbindbar ist, sowie eine Messeinrichtung (hierin auch als Messgerät bezeichnet) für eine diese Messeinrichtung durchfließende zu portionierende Substanz, wobei die Messeinrichtung ein Durchflussmesser (3) und/oder ein Durchflusszähler (3) ist, und eine Anzeigeeinheit (4), wobei die Anzeigeeinheit (4) derart eingerichtet ist, dass sie eine Menge des Volumens der die Messeinrichtung durchströmenden zu portionierenden Substanz anzeigt. Die Integration von Einlass/Auslass, Messgerät und Anzeigeeinheit in einer einzigen Dosiervorrichtung hat darüber hinaus den Vorteil, dass dies nicht nur Platz spart, sondern auch den Betriebsprozess vereinfacht.

Dem Fachmann ist klar, dass das Volumen, welches die abzumessende Substanz innerhalb des kippbaren Gefäßes oder eines Behälters, in welchem die abzumessende Substanz gelagert ist, einnimmt, unterschiedlich ist zu dem Volumen der Substanz, welche die erfindungsgemäße Dosiervorrichtung verlassen hat. Dies gilt natürlich nur für den Fall, dass das kippbare Gefäß oder der Behälter nicht komplett entleert wird.

Im Sinne der Erfindung bezeichnet das Volumen ein Volumen der abzumessenden Substanz, wobei eine Menge eine Menge des Volumens bezeichnet, wobei die Menge des Volumens der das Messgerät/ die Messeinrichtung passierende abzumessenden Substanz durch das Messgerät/ die Messeinrichtung quantifiziert wird.

In einer weiteren Ausführungsform weist die Dosiervorrichtung zusätzlich einen Dosiervorrichtungsauslass (2) auf, der aus mehreren gegeneinander verschiebbaren Segmenten, insbesondere aus zumindest drei gegeneinander verschiebbaren Segmenten, ausgebildet ist. Dabei sind die Segmente bevorzugt so ausgestaltet, dass diese so ineinandergreifen, dass der Dosiervorrichtungsauslass teleskopartig auseinandergezogen und wieder zusammengeschoben werden kann. Vorteilhaft kann dadurch erreicht werden, dass der Dosiervorrichtungsauslass in der Länge variabel ist. Weiterhin vorteilhaft ergibt sich hieraus, dass der in dieser Weise teleskopierbare Dosiervorrichtungsauslass auf einfache Weise in eine Öffnung eines Behälters, welches zur Aufnahme der abzumessenden Substanz eingerichtet ist, eingeführt werden kann. Die Konstruktion des Auslasses der Dosiervorrichtung, die aus mehreren gegeneinander verschiebbaren Segmenten, insbesondere aus mindestens drei solchen Segmenten, besteht, bietet somit den Vorteil einer variablen Länge. Diese Anpassungsfähigkeit gewährleistet darüber hinaus die Kompatibilität mit verschiedenen Behältergrößen und -konfigurationen. Weiterhin können die Segmente so ausgestaltet sein, dass sie vom Zentrum der Dosiervorrichtung wegzeigend, konisch zulaufend sind. Somit kann vorteilhaft erreicht werden, dass der Dosiervorrichtungsauslass die Funktion eines Trichters aufweist. Dieses Design sorgt vorteilhaft für einen stromlinienförmigen Fluss der Substanz, reduziert das Verschütten und gewährleistet einen effizienten Transfer in einen Aufnahmebehälter.

In einer weiteren Ausführungsform ist der auf diese Weise in der Länge verstellbare Dosiervorrichtungsauslass zusätzlich an seiner Basis, also dem Abschnitt, welcher der Anzeigeeinheit (4) am nächsten liegt, verstellbar so dass der Dosiervorrichtungsauslass in zumindest zwei Freiheitsgraden in Bezug auf die Längsachse des kippbaren Gefäßes (6) bewegt werden kann. Dadurch, dass der Dosiervorrichtungsauslass nicht nur in der Länge angepasst werden kann, sondern auch an seiner Basis, ermöglicht dies eine Bewegung in mindestens zwei Freiheitsgraden in Bezug auf die Längsachse des kippbaren Gefäßes. Dies bietet eine erhöhte Flexibilität und Anpassungsfähigkeit an verschiedene Anwendungen und Situationen.

Gemäß einer Ausführungsform ist der Dosiervorrichtungsauslass der Dosiervorrichtung aus einem formbaren Material, bspw. einem Elastomer, gebildet. Daraus ergibt sich vorteilhaft, dass der Dosiervorrichtungsauslass eine hohe Resistenz gegenüber Erschütterungen aufweist und nicht oder nur sehr schwer abbrechen kann. Dies minimiert das Risiko von Ausfallzeiten und erhöht die Langlebigkeit der Dosiervorrichtung, selbst in anspruchsvollen Anwendungen. Darüber hinaus kann der bewegliche und formbare Dosiervorrichtungsauslass, der aus einem formbaren Material besteht, durch eine mechanische Krafteinwirkung derart verformt werden, dass es dies dem Nutzer ermöglicht, den Auslass an verschiedene Öffnungen anzupassen, was die Vielseitige Einsetzbarkeit und Benutzerfreundlichkeit der Dosiervorrichtung erhöht.

Gemäß einer weiteren Ausführungsform ist der Dosiervorrichtungsauslass (2) beweglich ausgestaltet. Ist der Dosiervorrichtungsauslass zumindest abschnittsweise aus einem verformbaren Metall gebildet, welches zumindest abschnittsweise mit einem Kunststoff überzogen sein kann. Der so ausgebildete Dosiervorrichtungsauslass ist dazu eingerichtet durch mechanische Krafteinwirkung eines Anwenders je nach Bedarf manuell verformt zu werden. Somit kann vorteilhaft erreicht werden, dass der Dosiervorrichtungsauslass flexibel an unterschiedliche Öffnungen angepasst werden kann, in welche die abzumessende Substanz eingeführt werden soll.

In einer bevorzugten Ausgestaltung ist der als Aufsatz ausgebildete Einlass der Dosiervorrichtung derart ausgestaltet, dass er austauschbar ist. Austauschbar ist dabei im Sinne der Erfindung, dass der Aufsatz reversibel mit einem Abschnitt der Dosiervorrichtung, welcher das Messgerät aufweist, verbindbar ist. Diese modulare Bauweise bietet dem Nutzer Flexibilität und ermöglicht die schnelle Anpassung der Dosiervorrichtung an verschiedene Anwendungen oder Anforderungen bzw. Bedingungen.

Besonders bevorzugt umfasst die Dosiervorrichtung zumindest einen weiteren als Aufsatz ausgebildeten Einlass, der eine Größe und/oder Form und/oder ein Gewinde aufweist, deren, bzw. dessen Maße sich von denen des ersten Einlasses unterscheiden. Somit ist die Dosiervorrichtung vorteilhaft derart anpassbar, dass sie mit dem Gefäßauslass von mindestens zwei, bevorzugt drei, besonders bevorzugt vier bis zehn, ganz besonders bevorzugt elf bis 20 oder beliebig vielen kippbaren Gefäßen verbindbar ist, wobei die Auslässe der mindestens zwei kippbaren Gefäße unterschiedliche und/oder identische Abmessungen und/oder Gewinde aufweisen. Dies ermöglicht die Verbindung mit einer Vielzahl von kippbaren Gefäßen unterschiedlicher Größen, Formen und Gewinde. Somit ist sichergestellt, dass die Vorrichtung in einer Vielzahl von Anwendungen eingesetzt werden kann, unabhängig von den spezifischen Designmerkmalen des Gefäßauslasses.

In einer weiteren Ausführungsform ist der Aufsatz zum Befestigen der Dosiervorrichtung am Auslass eines kippbaren Gefäßes (6) austauschbar und/oder in der Größe variabel. Die modulare und anpassbare Bauweise des Aufsatzes ermöglicht sowohl einen einfachen Austausch als auch eine Anpassung der Größe. Dies bietet dem Benutzer eine beispiellose Flexibilität und ermöglicht die schnelle Anpassung der Dosiervorrichtung an verschiedene Anforderungen.

Eine Variabilität der Größe kann dadurch erreicht werden, indem der Durchmesser des Einlasses oder der Durchmesser des Teils der Dosiervorrichtung, durch welchen die abzumessende Substanz in die Dosiervorrichtung gelangt, in der Art eines Ballons ausgestaltet ist, welcher abhängig von seinem Füllzustand das kippbaren Gefäß oder einen die abzumessende Substanz enthaltenen Behälter (auch: Behälter) gegen den Einlass abdichtet. Durch die Integration eines Ballons in den Einlass der Dosiervorrichtung wird eine effektive und adaptive Abdichtung gegen das kippbare Gefäß oder einen anderen Behälter gewährleistet. Dies minimiert das Risiko von Leckagen und gewährleistet eine präzise Dosierung.

Insbesondere ist der Einlass der Dosiervorrichtung so ausgestaltet, dass dieser ein Ballonmodul aufweist, welches dazu eingerichtet ist, den Einlass (1) der Dosiervorrichtung gegen den Auslass des kippbaren Gefäßes oder gegen die Öffnung eines Behälters, welcher die abzumessende Substanz enthält, abzudichten. Durch die Integration eines Ballonmoduls in den Einlass der Dosiervorrichtung wird eine effektive und adaptive Abdichtung gegen das kippbare Gefäß oder einen anderen Behälter gewährleistet. Dies minimiert das Risiko von Leckagen und gewährleistet eine präzise Dosierung.

Der Einlass weist dazu ein bevorzugt ringförmiges Ballonmodul auf. Sobald der Einlass der Dosiervorrichtung innerhalb oder außerhalb der Öffnung des kippbaren Gefäßes oder des Behälters positioniert ist, kann das Volumen des Ballons des ringförmigen Ballonmoduls bspw. durch ein pneumatisches oder hydraulisches Mittel (z.B. eine elektronisch ansteuerbare Pumpe) vergrößert oder verkleinert werden. Dabei ist insbesondere das pneumatische Mittel vorteilhaft, da hier eine wesentlich geringere Gefahr besteht, dass die Vergrößerung des Volumens des Ballons zu einer Beschädigung des kippbaren Gefäßes oder des Behälters führt. Die Verwendung eines pneumatischen oder hydraulischen Mittels zur Anpassung des Ballonmodulvolumens bietet nicht nur eine effiziente Abdichtung, sondern reduziert auch das Risiko von Schäden, insbesondere im Vergleich zu anderen Abdichtungsmethoden.

Nach einer Ausführungsform ist der Einlass der Dosiervorrichtung mitsamt Ballonmodul in eine Öffnung eines kippbaren Gefäßes oder eines Behälters einführbar. Nach einer weiteren Ausführungsform ist der Einlass der Dosiervorrichtung mitsamt Ballonmodul über eine Öffnung eines kippbaren Gefäßes oder eines Behälters stülpbar. Dabei ist dem Fachmann bewusst, dass je nach Ausgestaltung (einführbar oder überstülpbar) das Ballonmoduls entsprechend so auszugestalten ist, dass es entweder vom Inneren der Behälteröffnung oder vom Äußeren der Behälteröffnung abdichtet. Die abzumessende Substanz gelangt durch das Ballonmodul in den, den Einlass nachfolgenden Bereich. Durch die Verwendung eines Ballonmoduls kann vorteilhaft erreicht werden, dass die Dosiervorrichtung an unterschiedliche Öffnungsdurchmesser der Behälter, welche die abzumessende Substanz enthalten, angepasst werden kann.

Der Einlass der Dosiervorrichtung kann mit Magneten ausgestattet sein, die eine sichere und reversible Verbindung mit metallischen kippbaren Gefäßen ermöglichen. Dies bietet eine schnelle, einfache und zugleich reversible Befestigungsmöglichkeit, insbesondere wenn das Gefäß ein magnetisch reaktiven Material umfasst oder daraus besteht.

Der Einlass der Dosiervorrichtung kann mit einem Schnellverschlussmechanismus ausgestattet sein, um eine schnelle und einfache Verbindung und Trennung zwischen dem Einlass der Dosiervorrichtung und dem Auslass des kippbaren Gefäßes zu ermöglichen. Dies ist besonders nützlich in Anwendungen, bei denen häufige Wechsel zwischen verschiedenen Gefäßen erforderlich sind.

In einer Ausführungsform weist die Dosiervorrichtung, insbesondere der Einlass und/oder der Durchflussmesser, einen integrierten Temperatursensor auf, um die Temperatur der durchfließenden Substanz zu überwachen. Dies ist besonders nützlich für Substanzen, deren Fließeigenschaften temperaturabhängig sind.

In einer Ausführungsform weist die Dosiervorrichtung, insbesondere der Einlass und/oder der Durchflussmesser, ein integriertes Heizelement und/oder ein Kühlelement, insbesondere eine integrierte Heizeinheit auf, die es ermöglicht, die zu dosierende Substanz auf eine gewünschte Temperatur zu bringen oder zu halten. Hierdurch kann eine präzise Dosierung unter verschiedenen Temperaturbedingungen gewährleistet werden. Einerseits erweitert dies das Anwendungsspektrum der erfindungsgemäßen Dosiervorrichtung, da bspw. unter dem Einsatz eines Heizelements auch Substanzen, die bei bestimmten Temperaturen erst flüssig werden, dosiert werden können, und vice versa. Zudem reduziert dies das Risikos von Verklumpungen oder Verfestigungen in der zu dosierenden Substanz durch eine gezielte Temperaturregelung.

In einer bevorzugten Ausgestaltung weist die Dosiervorrichtung sowohl einen integrierten Temperatursensor und ein integriertes Heizelement auf, was insbesondere für die genaue Dosierung von zu dosierenden Substanzen entscheidend ist, die bei bestimmten Temperaturen erst flüssig werden (bspw. Butter, Wachs).

In einer bevorzugten Ausgestaltung weist die Dosiervorrichtung sowohl einen integrierten Temperatursensor und ein integriertes Kühlelement auf, was insbesondere für die genaue Dosierung von temperatursensitiven Flüssigkeiten entscheidend ist.

In einer Ausführungsform weist der Einlass einen optischer Sensor könnte integriert werden, um die Konsistenz, Farbe oder andere visuelle Merkmale der durchfließenden Substanz zu überwachen. Dies ermöglicht eine Qualitätskontrolle und Überwachung der Substanzeigenschaften in Echtzeit, was die Dosiergenauigkeit und -zuverlässigkeit erhöht. Der optische Sensor kann als Infrarot-Sensor, Ultraviolett-Sensor, Farbsensor oder als Kombination mehrerer Sensortypen ausgestaltet sein, was die Erkennung und Unterscheidung verschiedener Substanzeigenschaften, wie Transparenz, Farbe oder spezifische Absorptionseigenschaften, erlaubt. Alternativ dazu kann der optische Sensor eine integrierte Mikrokamera aufweisen, die hochauflösende Bilder der durchfließenden Substanz aufnimmt. Dies ermöglicht eine detaillierte visuelle Überwachung und Analyse der Substanz, einschließlich der Erkennung von Verunreinigungen oder Partikeln.

Vorzugsweise ist der optische Sensor weist der optische Sensor eine Schnittstelle auf, die eine Echtzeit-Datenübertragung an eine externe Recheneinheit oder ein System ermöglicht. Dies ermöglicht eine sofortige Überwachung und Analyse der Daten, was eine schnelle Reaktion auf Abweichungen oder Probleme ermöglicht.

In einer Ausgestaltung der Erfindung verfügt der optische Sensor über eine automatische Kalibrierungsfunktion, die regelmäßig oder bei Bedarf durchgeführt wird. Dies gewährleistet konstante und genaue (Ab-)Messungen von Substanzen über einen längeren Zeitraum und reduziert das Risiko von Messfehlern. Der optische Sensor kann so programmiert sein, dass er sich in regelmäßigen Intervallen automatisch kalibriert, beispielsweise alle 24 Stunden, nach einer festgelegten Anzahl von Messungen oder nach einer bestimmten Betriebszeit. Vorzugsweise gibt der Sensor im Anschluss an die Kalibrierung ein Feedback, z. B. in Form einer LED-Anzeige, eines akustischen Signals oder einer Benachrichtigung an ein verbundenes System, um den Status der Kalibrierung anzuzeigen. Dies hat den Vorteil, dass der Nutzer oder das System über den erfolgreichen Abschluss der Kalibrierung oder mögliche Probleme informiert wird. Vorzugsweise speichert der optische Sensor oder eine Recheneinheit die neuen Kalibrierungsdaten ab und die Dosiervorrichtung setzt den normalen Betrieb fort, wenn die Kalibrierung erfolgreich abgeschlossen ist. In einer Ausgestaltung kann vorgesehen sein, dass wenn der optische Sensor eine Abweichung von den vordefinierten Messstandards feststellt, dann initiiert er automatisch den Kalibrierungsprozess.

In einer weiteren Ausgestaltung passt der Sensor seine Kalibrierungsparameter adaptiv an sich verändernde Umgebungsbedingungen (z. B. Temperatur, Luftfeuchte oder Lichtverhältnisse) an, wenn der optische Sensor feststellt, dass sich die Umgebungsbedingungen geändert haben. Dies ermöglicht eine präzise und konsistente (Ab-)Messung von Substanzen auch unter variierenden externen Bedingungen, wodurch die Zuverlässigkeit und Vielseitigkeit der Dosiervorrichtung in unterschiedlichen Umgebungen oder Anwendungsbedingungen gesteigert wird. Ein Beispiel für sich verändernde Umgebungsbedingungen kann hierfür auch die Änderung der Jahreszeit, bspw. von Sommer auf Winter sein, wobei die Änderung der Jahreszeit bspw. mit sich verändernden Temperaturen oder Luftfeuchten assoziiert ist.

In einer bevorzugte Ausgestaltung weist die Dosiervorrichtung einen Umgebungslichtsensor auf, der in der Lage ist, die Lichtverhältnisse in der Umgebung zu erkennen und die Helligkeit und/oder Farbe der Anzeigeeinheit entsprechend anzupassen.

Die Dosiervorrichtung kann ein integriertes Lesegerät aufweisen, das derart eingerichtet ist, dass es Identifikationsinformationen von Tags, die Informationen tragen, wie bspw. Barcode, QR-Codes, RFID- oder NFC-Tags, und die an einem kippbaren Gefäß und/oder an einer zu dosierenden Substanzen angebracht sind, ermittelt bzw. ausliest. Dies kann den manuellen Identifikationsaufwand reduzieren und Fehler vermeiden, die durch manuelle Eingaben entstehen könnten. Der Einsatz solcher Dosiervorrichtung mit einem integrierten Lesegerät beispielsweise in Krankenhäusern und Apotheken erlaubt es Medikamente und andere medizinische Substanzen präziser zu dosieren und gleichzeitig sicherzustellen, dass das richtige Medikament für den richtigen Patienten verwendet wird. Gleichzeitig ermöglicht es, dass Informationen von Tags zu ausgelesen werden können, eine bessere Rückverfolgbarkeit von Produkten oder Substanzen, was besonders in Branchen wie der Lebensmittel- oder Pharmaindustrie von Vorteil ist. Beispielsweise ist das integrierte Lesegerät ein elektromagnetisches Lesegerät wie bspw. ein RFID- oder NFC-Lesegerät, dass dazu eingerichtet ist, Informationen von RFID- oder NFC-Tags zu ermitteln bzw. auszulesen. Elektromagnetische Lesegeräte wie RFID- oder NFC-Lesegeräte können Informationen in Echtzeit auslesen, was zu einer schnellen Datenverarbeitung und -reaktion führt.

Beispielsweise werden die Informationen nach dem erfassen durch ein integriertes Lesegerät digitalisiert (falls noch nicht geschehen) und an eine zentrale Recheneinheit oder ein Steuerungssystem weitergeleitet. Dies kann drahtlos oder über eine kabelgebundene Verbindung erfolgen. Die Recheneinheit empfängt die Daten und beginnt mit der Verarbeitung der empfangenen Daten. Dies kann das Abgleichen der Daten mit einer Datenbank, das Interpretieren der Informationen oder das Anwenden von Algorithmen zur Entscheidungsfindung beinhalten. Basierend auf den gelesenen Informationen kann die Recheneinheit beispielsweise die Art der Substanz, ihre Menge, ihr Verfallsdatum oder andere relevante Daten, die für eine Qualitätssicherung erforderlich sind, bestimmen.

In einer Ausgestaltung der Erfindung leitet die Recheneinheit nach der Datenverarbeitung spezifische Aktionen ein, die auf den erfassten Informationen basieren. Dies kann bspw. beinhalten:
- die genaue Dosierung der zu dosierenden Substanz oder des Produkts,
- die Aktivierung von Alarmen oder Benachrichtigungen, falls das Verfalldatum der zu dosierenden Substanz abgelaufen ist oder nicht den Spezifikationen entspricht,
- die Speicherung der Daten bspw. in einer Datenbank für spätere Rückverfolgung oder Berichterstattung,
- die Aktualisierung des Lagerbestands oder die Bestellung von Nachschub der zu dosierenden Substanz, wenn die Menge unter einen bestimmten Schwellenwert fällt. Bspw. kann die Dosiervorrichtung in Lagern eingesetzt werden, um Produkte zu identifizieren und zu verfolgen, wodurch der Bestandsmanagementprozess optimiert wird.

Es kann vorgesehen sein, dass die Recheneinheit nach Abschluss der Aktionen ein Feedback an den Nutzer oder das Bedienungspersonal ausgibt. Dies kann eine Bestätigung über die erfolgreiche Dosierung, eine Fehlermeldung oder andere relevante Informationen beinhalten.

Sobald alle Aktionen abgeschlossen sind und gegebenenfalls ein Feedback an den Nutzer oder das Bedienungspersonal gegeben wurde, wird die Dosiervorrichtung zurückgesetzt und ist bereit für den nächsten Zyklus oder die nächste zu dosierende Substanz.

### Definition kippbares Gefäß

Im Sinne der Erfindung bezeichnet ein kippbares Gefäß mit einem Gefäßauslass ein Gefäß, welches eine Substanz, insbesondere eine Flüssigkeit und/oder ein Pulver und/oder ein Granulat, beinhalten kann. Dabei kann das Gefäß starre Dimensionen aufweisen, wie bspw. eine Glasflasche, ein Reagenzglas, ein Glaskolben oder ein Metallkanister. Das Gefäß kann auch als ein Gefäß mit verformbaren Dimensionen, wie bspw. ein Tetra Pak, ein Karton oder eine Plastikflasche, ausgebildet sein.

Das kippbare Gefäß umfasst hierbei einen Gefäßauslass, welcher bevorzugt als Schraubverschluss und/oder Steckverschluss, also ein mit einem Pfropfen, bspw. einem Korken oder Kronkorken verschließbarer Verschluss, ausgebildet ist.

### Definition Flüssigkeit, Pulver, Granulat

Eine Substanz fließt im Sinne der Erfindung, wenn die Substanz bewegt wird. Somit fließt eine Substanz durch ein Messgerät, wenn die Substanz durch das Messgerät bewegt wird bzw. wenn sich die Substanz durch das Messgerät bewegt.

Eine Substanz ist im Sinne der Erfindung eine Menge eines bestimmten Materials oder Materialgemisches, welches in portionierbarer Form vorliegt. Dabei kann es entweder als eine Flüssigkeit oder aber in Form eines Schüttgutes, vorzugsweise eines Pulvers und/oder eines Granulat, vorliegen oder eine Kombination aus diesen darstellen. Ein Schüttgut ist vorzugsweise ein Gemenge, welches aus einer Vielzahl kleiner Bestandteile ausgebildet ist, die in schüttfähiger Form vorliegen.

Das kippbare Gefäß ist erfindungsgemäß derart ausgebildet, dass es ein Volumen umfasst, das eine Substanz, insbesondere eine Flüssigkeit und/oder ein Pulver und/oder ein Granulat, aufnehmen kann bzw. beinhaltet. Im Sinne der Erfindung bezeichnet ein Pulver hierbei einen oder mehrere nahezu staubfein zerkleinerte und/oder zermahlene und/oder zerriebene Stoffe, bspw. Mehl, Puderzucker, Zucker oder Stärke, wobei die Teilchengröße des im Pulver enthaltenen Stoffes kleiner oder gleich 1 mm ist. Pulver sind disperse Systeme aus einer festen und einer gasförmigen Phase. Die feste Phase besteht aus fein verteilten Partikeln, die sich makroskopisch als Haufwerke präsentieren. Die einzelnen Partikel unterscheiden sich durch Gestalt, Masse und Oberfläche.

Ein Granulat bezeichnet im Sinne der Erfindung einen oder mehrere zu einzelnen Körnern zerkleinerte Stoffe, wobei die Teilchengröße der einzelnen Körner im makroskopischen Bereich, also oberhalb von 1 mm bis 1 cm, vorzugsweise 1 mm bis zu 2 cm liegt, bspw. Getreide, Kandiszucker, grobes Salz oder Pfefferkörner.

Eine Flüssigkeit bezieht sich im Sinne der Erfindung auf einen oder mehrere verflüssigte Stoffe, welcher, bzw. welche eine beliebige Viskosität und/oder Zusammensetzung aufweisen, wie bspw. Wasser, Milch oder Öl. Die Flüssigkeit kann auch eine Suspension aus einer Flüssigkeit und einem Pulver (heterogenes Stoffgemisch aus einer Flüssigkeit und darin fein verteilten partikulären Feststoff(-körpern), bspw. Pulver) umfassen.

### Auslass der Dosiervorrichtung, Dosiervorrichtungsauslass

Die erfindungsgemäße Dosiervorrichtung umfasst zudem einen Dosiervorrichtungsauslass, welcher derart ausgelegt ist, dass er eine Flüssigkeit und/oder ein Pulver und/oder ein Granulat nach dem Dosiervorgang in ein weiteres Gefäß austreten lässt. Bevorzugt ist der Dosiervorrichtungsauslass dabei derart ausgestaltet, dass er eine Gießhilfe umfasst, insbesondere eine Lippe oder eine Gießmulde, welche das Transferieren von einer Flüssigkeit und/oder einem Pulver und/oder einem Granulat erleichtert. Somit ist eine kontrollierte Abgabe der zu portionierenden Flüssigkeit und/oder des zu portionierenden Pulvers und/oder des zu portionierenden Granulates möglich. Dies minimiert das Risiko von Verschütten und gewährleistet eine genaue Dosierung.

Besonders bevorzugt ist der Dosiervorrichtungsauslass derart gestaltet, dass er trichterförmig zulaufend ausgestaltet ist. Vorteilhaft ist so gewährleistet, dass ein kontrolliertes Transferieren von einer Flüssigkeit und/oder einem Pulver und/oder einem Granulat in ein weiteres Gefäß ohne Verschütten der Flüssigkeit und/oder des Pulvers und/oder des Granulates auch dann gewährleistet ist, wenn das weitere Gefäß eine schmale Öffnung hat, wie bspw. eine Flasche.

Nach einer ganz besonders bevorzugten Ausgestaltung umfasst die erfindungsgemäße Dosiervorrichtung einen Dosiervorrichtungsauslass, welcher schwenkbar, bzw. formbar ausgestaltet ist. Insbesondere ist der Dosiervorrichtungsauslass derart ausgestaltet, dass er in einer beliebigen Richtung ausrichtbar ist. Somit ist vorteilhaft gewährleistet, dass der Dosiervorrichtungsauslass entsprechend der gegebenen Anforderungen des Arbeitsumfeldes zum Transferieren von einer Flüssigkeit und/oder eines Pulvers und/oder eines Granulates in Richtung des weiteren Gefäßes ausrichtbar ist.

In einer Ausgestaltung ist der Dosiervorrichtungsauslass dabei derart ausgestaltet, dass er aus einzelnen Segmenten besteht, die zueinander verschiebbar und ineinander einfügbar, insbesondere passgenau einfügbar angeordnet sind. Insbesondere ist der Dosiervorrichtungsauslass so zusammenschiebbar und ausziehbar gestaltet. Somit ist die Länge des Dosiervorrichtungsauslasses durch den Nutzer frei und reversibel festlegbar, wodurch vorteilhaft der von der Dosiervorrichtung beanspruchte Raum zur Lagerung verkleinert werden kann. Zudem lässt sich hierdurch das Fassungsvermögen des Dosiervorrichtungsauslasses einstellen. Auch die Ausrichtung des Dosiervorrichtungsauslasses ist so durch den Nutzer reversibel einstellbar, sodass die Dosiervorrichtung in alle Raumrichtungen flexibel anwendbar ist. Die einzelnen Segmente sind dabei derart ausgestaltet, dass sie aus Metall, insbesondere Aluminium oder Edelstahl und/oder aus Kunststoff, insbesondere Silikon, wodurch vorteilhaft die Haltbarkeit gegenüber Stößen und eine leichte Reinigung und geringes Anhaften von zu portionierenden Stoffen sichergestellt ist, ausgestaltet sind.

In einer weiteren Ausgestaltungsform ist der Dosiervorrichtungsauslass derart ausgestaltet, dass er aus einem einzelnen Werkstück besteht. Insbesondere handelt es sich bei dem Werkstück um ein Werkstück aus einem elastisch verformbaren Material, insbesondere einem Elastomer, welches vorteilhaft in eine für die Nutzung günstige Form, insbesondere temporär, gebracht werden kann. Durch das gewählte Material ist die Form des Dosiervorrichtungsauslasses zudem reversibel veränderbar und an die Bedingungen des Arbeitsplatzes anpassbar, sowie beständig gegenüber langer Beanspruchung und leicht zu reinigen. Zudem haben Auslässe aus elastisch verformbaren Material, insbesondere einem Elastomer den Vorteil, dass sie ein geringes Gewicht aufweisen und leicht zu reinigen sind.

In einer weiteren Ausgestaltungsform ist der Dosiervorrichtungsauslass derart ausgestaltet, dass er aus einem einzelnen Werkstück besteht. Insbesondere handelt es sich bei dem Werkstück um ein Werkstück aus einem Edelstahl. Edelstahl kann keinen Rost ansetzen und hat deswegen normalerweise eine lange Lebensdauer. Außerdem lassen sich Auslässe aus Edelstahl, bspw. unter Zusatz von Reinigungsmitteln, wie Tensiden, Säuren oder Laugen, problemlos reinigen, wodurch die Gesamtlebensdauer und Hygiene der Vorrichtung verbessert wird.

Der Dosiervorrichtungsauslass kann auch ein Filterelement, bspw. ein Sieb, umfassen, wobei das Sieb innerhalb des Dosiervorrichtungsauslasses in der Fließ- bzw. Schüttrichtung angeordnet ist. Hierdurch lassen sich vorteilhaft feste Stoffe, wie Pulver oder Granulaten aus Flüssigkeiten trennen/herausfiltern. Unabhängig davon erlaubt dies zudem die Separierung von grobem partikulärem Material von feinerem partikulärem Material, wie bspw. Granulate von Pulvern. Im Ergebnis ermöglicht das integrierte Sieb im Dosiervorrichtungsauslass die effiziente Trennung von festen Stoffen oder die Separierung von unterschiedlichen partikulären Materialien, wodurch die Qualität und Präzision des Dosierprozesses weiter erhöht wird. Vorzugsweise ist das Sieb an der Durchlaufstelle der Flüssigkeit an dem Dosiervorrichtungsauslass angeordnet.

Für reine Flüssigkeiten ohne größere Partikel kann das Filterelement eine feinere Netzweite von etwa 10 bis 100 Mikrometern (µm) aufweisen, um kleinste Verunreinigungen zu entfernen. Bei Flüssigkeiten mit sichtbaren Partikeln oder Verunreinigungen kann für das Filterelement eine gröbere Netzweite von 100 bis 500 µm geeignet sein.

Die Netzweite des Filterelements hängt für Pulver von der Korngröße des Pulvers ab. Für feine Pulver, wie einige Lebensmittelpulver oder pharmazeutische Pulver, kann eine Netzweite von 100 bis 500 µm geeignet sein. Beispiele für feinere Pulver sind feine Getreidemehle, Puderzucker, Espressopulver, feine Gewürze (wie fein gemahlener schwarzer Pfeffer oder feines Tafelsalz), Stärken und Puder (wie Maisstärke oder Babypuder), feine pharmazeutische Pulver (wie Medikamente in einer sehr feinen Pulverform, um eine schnelle Auflösung und Absorption zu gewährleisten), Kakaopulver, Tonerpulver (bspw. wie in Laserdruckern und Kopierern verwendet), Aktivkohlepulver, Proteinisolatpulver, Mineralpuder. Für gröbere Pulver kann eine Netzweite von 500 µm bis 1 Millimeter (mm) oder sogar größer erforderlich sein. Gröbere Pulver sind in der Regel weniger fein gemahlen oder zerkleinert als feine Pulver und haben daher größere Partikelgrößen. Beispiele hierfür sind grobe Getreidemehle (wie Vollkornmehl oder grob gemahlenes Maismehl), Kaffeebohnen, grobe Gewürze (wie grob gemahlener schwarzer Pfeffer oder grobes Meersalz), granulierte Zuckerarten, grobe Baustoffe (wie Sand oder Zementpulver), grobe Düngemittel (wie granulierte oder pelletierte Formen von Düngemitteln), grobe pharmazeutische Pulver oder Nahrungsergänzungsmittel, insbesondere wenn diese für die kontrollierte Freisetzung bestimmt sind, grobe Proteinpulver, grobe Mineralien und Erden.

Granulate sind in der Regel gröber als Pulver, sodass daher zumeist größere Netzweiten erforderlich sind. Für die Netzweite des Filterelements eignen sich 1 bis 5 mm für viele Granulate. Bei besonders großen Granulaten kann es sogar notwendig sein, noch größere Netzweiten von über 5 mm zu verwenden.

### Durchflussmesser/-zähler

Weiterhin umfasst die erfindungsgemäße Dosiervorrichtung einen Durchflussmesser und/oder einen Durchflusszähler. Im Sinne der Erfindung bezeichnet ein Durchflusszähler eine Messeinrichtung zum Erfassen einer Menge, vorzugsweise eines Volumens, eines sie durchfließenden Stoffes bzw. einer sie durchfließenden Substanz, wobei die Stoffmenge bevorzugt in einer für ein Volumen gängigen Einheit, bspw. Liter, Kubikzentimenter, etc. ausgegeben wird. Ein Durchflussmesser bezieht sich im Sinne der Erfindung auf eine Messeinrichtung, welche die Menge des Durchflusses normiert auf eine Zeiteinheit angibt, bspw. I/s. Zum Erfassen der Menge des Stoffes, welcher den Durchflussmesser durchfließt, ist das gemessene Ergebnis des Durchflussmessers mit der Zeit, in der der Durchfluss gemessen wurde zu multiplizieren.

Der von der erfindungsgemäßen Dosiervorrichtung umfasste Durchflussmesser basiert dabei auf einem akustischen, gyroskopischen, magnetisch-induktiven, mechanisch-volumetrischen, optischen, thermischen oder Wirkdruck-/Stauverfahren.

Im Weiteren ist das Wirkprinzip der erfindungsgemäßen Dosiervorrichtung umfassend einen mechanisch-volumetrischen Durchflussmesser, insbesondere basierend auf einem Flügelrad, erörtert. Dieses Beispiel ist nicht einschränkend zu verstehen. Dem Fachmann ist ersichtlich, dass die Wirkweise auch auf andere Durchflussmessverfahren ohne Weiteres übertragbar ist. So kann der Durchflussmesser vorzugsweise auch als ein magnetisch induktiver Durchflussmesser oder als ein Ovalrad-Durchflussmesser oder als ein Ultraschalldurchflussmesser oder als ein thermischer Massendurchflussmesser oder als ein Durchflussmesser für Flüssigkeiten basierend auf der Differenzdruckmessung oder als ein Coriolisdurchflussmesser, auch als Massendurchflussmesser bezeichnet, ausgebildet sein.

Der Durchflussmesser kann als piezoelektrischer Durchflussmesser ausgestaltet sein. Ein solcher Durchflussmesser nutzt die piezoelektrischen Eigenschaften bestimmter Materialien, um den Durchfluss zu messen. Wenn eine Flüssigkeit oder ein Pulver durch den Sensor fließt, erzeugt sie Vibrationen, die von einem piezoelektrischen Element erfasst werden können. Die Frequenz dieser Vibrationen kann dann zur Bestimmung des Durchflusses verwendet werden. Dies ermöglicht eine präzise und direkte (Ab-)Messung des Durchflusses, insbesondere bei variablen Flussraten, durch Erfassung der durch den fließenden Stoff erzeugten Vibrationen.

Der Durchflussmesser kann als kapazitiver Durchflussmesser ausgestaltet sein. Dieser Typ von Durchflussmesser nutzt die Änderung der Kapazität zwischen zwei Elektroden, die durch die fließende Substanz verursacht wird. Dies kann besonders nützlich sein, wenn die fließende Substanz elektrisch leitfähig ist, wie einige Flüssigkeiten oder feuchte Pulver. Dies bietet vorteilhaft eine schnelle und genaue (Ab-)Messung ohne mechanische Teile.

In einer bevorzugten Ausgestaltung weist der Durchflussmesser einen integrierten Temperatursensor auf. Ein solcher Durchflussmesser ermittelt nicht nur den Durchfluss, sondern auch die Temperatur der durchfließenden Substanz. Diese Anordnung kann besonders nützlich sein, wenn die Viskosität oder der Durchfluss der Substanz temperaturabhängig ist, sodass die Dosierung dafür gezielt eingestellt werden kann.

In einer bevorzugten Ausgestaltung weist der Durchflussmesser einen Drucksensor auf. In einigen Anwendungen ist dies nützlich, da hierdurch nicht nur der Durchfluss, sondern auch der Druck der durchfließenden Substanz ermittelt wird. Dies ist hilfreich, um Verstopfungen oder andere Probleme im System zu erkennen. Somit dient der Drucksensor der Früherkennung von Systemproblemen, wie Verstopfungen, und Optimierung des Dosierprozesses durch Drucküberwachung.

Der Durchflussmesser kann mit einem Element oder einem Mechanismus zur Rückflussverhinderung ausgestattet sein. Ein solches Element oder ein solcher Mechanismus der verhindert, dass die Substanz in die entgegengesetzte Richtung fließt. Dies kann nützlich sein, um sicherzustellen, dass die Substanz immer in die gewünschte Richtung fließt, besonders wenn die Dosiervorrichtung in einem System mit variablen Druckverhältnissen verwendet wird.

In einer Ausgestaltung umfasst die erfindungsgemäße Dosiervorrichtung einen Durchflussmesser umfassend ein Flügelrad. Dabei ist der Durchflussmesser derart eingerichtet, dass er an den Einlass der Dosiervorrichtung dicht, insbesondere hermetisch abschließend anschließt. Dem Durchflussmesser nachgeordnet an der dem Einlass gegenüberliegenden Seite befindet sich der Dosiervorrichtungsauslass der Dosiervorrichtung, welcher ebenfalls dicht, bzw. hermetisch abschließend an den Durchlaufmesser anschließt. Somit ist vorteilhaft gewährleistet, dass der Fluss einer Flüssigkeit und/oder eines Pulvers und/oder eines Granulates ohne Verluste durch den Durchflussmesser leitbar ist.

Gemäß einer Ausführungsform ist das Messgerät als ein Flügelrad-Durchflussmesser (3) ausgebildet. Durch die Implementierung eines Flügelrad-Durchflussmessers gewährleistet die Dosiervorrichtung eine konsistente Beförderung definierter Substanzmengen mit jeder Umdrehung, was eine präzise Dosierung bei jedem Gebrauch ermöglicht.

Gemäß einer weiteren Ausführungsform ist das Messgerät der Dosiervorrichtung als ein Flügelrad-Durchflussmesser ausgestaltet, wobei bei einem Feststellen des Flügelrades eine Rückstellkraft auf das Flügelrad wirkt, welche dafür sorgt, dass sich in den Kammern des Flügelrades befindliche Flüssigkeit und/oder befindliches Pulver und/oder Granulat über den Einlass der Dosiervorrichtung zurück in das kippbare Gefäß oder den Behälter, in welchem die abzumessende Substanz gelagert ist, befördert wird. Vorteilhaft ergibt sich daraus, dass bspw. die Temperatur einer abzumessenden Substanz keinen oder nur geringen Schwankungen außerhalb des kippbaren Gefäßes oder des Behälters ausgesetzt ist. Weiterhin kann durch das Zurückbefördern der abzumessenden Substanz erreicht werden, dass diese wieder von der gleichen Atmosphäre umgeben ist, wie die sich innerhalb des kippbaren Gefäßes oder Behälters abzumessende Substanz (bspw. wenn die abzumessende Substanz innerhalb einer Schutzgasatmosphäre gelagert werden muss, Um ihre Stabilität zu gewährleisten.

Unter einem Feststellen des Flügelrades wird verstanden, dass dieses, sofern die gewünschte abgemessene Substanz die Dosiervorrichtung über den Dosiervorrichtungsauslass verlassen hat, eine arretierte Position einnimmt, welche ein weiteres Drehen des Flügelrades verhindert bis weitere Substanz abgemessen werden soll. In einer darauf aufbauenden Abwandlung führt das Flügelrad beim Feststellvorgang, also noch vor Einnahme der arretierten Position, eine Bewegung aus, welche in Kammern des Flügelrads befindliche abzumessende Substanz zurück in das kippbare Gefäß oder den Behälter überführt.

Dabei legt das von den Kammern des Flügelrads umfasste Volumen die kleinste Menge an Substanz dar, das während des Dosiervorgangs durch die Dosiervorrichtung abgegeben werden kann. Im Unterschied zu einer Dosiervorrichtung mit einer Vorportionierkammer, welche für gewöhnlich ein Volumen im Bereich von mindestens 1 ml bis 10 ml, oftmals sogar 10 ml bis 100 ml oder mehr aufweisen, ist die kleinste Menge an Substanz, die durch die vorliegende Erfindung während eines Portioniervorgangs abgegeben werden kann durch eine geeignete Wahl des Flügelrads mit kleinen Kammern derart einstellbar, dass eine quasikontinuierliche Abgabe einer Substanz, insbesondere einer Flüssigkeit und/oder eines Pulvers und/oder eines Granulates möglich ist, wobei die kleinste abgebbare Menge an Substanz vorzugsweise weniger als 5 ml, bevorzugt weniger als 2 ml, besonders bevorzugt weniger als 1 ml beträgt. Zusätzlich ermöglicht die vorliegende Erfindung durch eine geeignete Wahl eines Flügelrads mit kleinen Kammern ein quasi-kontinuierliches Dosieren, sodass keine Wartezeiten durch eine große Vorportionierkammer entstehen, welche zunächst mit einer Substanz, insbesondere einer Flüssigkeit und/oder einem Pulver und/oder einem Granulat, gefüllt wird, bevor die Menge der Substanz abgegeben wird.

Bevorzugt ist der Durchflussmesser dabei derart ausgestaltet, dass das von ihm umfasste **Flügelrad** derart **mit einer Umwandung des Durchflussmessers abschließt,** dass, wenn das Flügelrad in einer Position verbleibt, bevorzugt festgestellt oder blockiert wird, ein Durchfluss einer Substanz unterbunden wird. Wenn das Flügelrad also nicht in Bewegung versetzbar ist, so ist ein Durchfluss von Flüssigkeiten und/oder Pulvern und/oder Granulaten nicht möglich. Vorteilhaft ist somit gewährleistet, dass bei einem Stillstand des Flügelrades das Portionieren und/oder Abmessen beendbar und/oder abbrechbar ist. Ein weiterer Vorteil ist, dass der Portioniervorgang automatisch beginnt, sobald eine Flüssigkeit und/oder ein Pulver und/oder Granulat das Flügelrad durchfließt und es damit in Bewegung versetzt.

In dieser Ausgestaltung wird mit jeder Umdrehung des Flügelrades eine definierte Menge an Flüssigkeit und/oder Pulver und/oder Granulat vom Einlass der Dosiervorrichtung zum Auslass der Dosiervorrichtung befördert, wobei die Menge durch die Größe der Kammern des Flügelrads festlegbar ist. Die Kammern des Flügelrades beziehen sich dabei auf den physischen Raum zwischen den einzelnen Flügeln des Flügelrades, in denen sich eine Flüssigkeit und/oder ein Pulver und/oder Granulat sammeln kann. Dabei ist die Dosiervorrichtung vorzugsweise derart eingerichtet, dass die Anzahl der Umdrehungen des Flügelrades erfasst wird, beispielsweise magnetisch-induktiv erfasst wird. In diesem Beispiel umfasst die Dosiervorrichtung einen Sensor. Zudem umfasst das vom Durchflussmesser umfasste Flügelrad zumindest einen Magneten, welcher derart mit dem Flügelrad verbunden ist, dass er sich bei einer Umdrehung zunächst von dem Sensor entfernt und dann wieder diesem annähert. Der Sensor erfasst über die Veränderung im Magnetfeld eine Frequenz der Umdrehung des Flügelrades, welche zusammengenommen mit der Zeit des Dosierprozesses das Errechnen der dosierten Menge an Flüssigkeit und/oder Pulver und/oder Granulat ermöglicht. Die Kombination aus einem Sensor und einem am Flügelrad angebrachten Magneten ermöglicht somit eine automatisierte Erfassung der Umdrehungen des Flügelrades, wodurch eine präzise Berechnung der dosierten Menge in Echtzeit ermöglicht wird. Somit ist vorteilhaft ein kontinuierliches Portionieren und/oder Abmessen von Flüssigkeiten und/oder Pulvern und/oder Granulaten ermöglicht.

Nach einer besonders bevorzugten Ausgestaltung ist das von dem Durchflussmesser umfasste **Flügelrad** derart ausgestaltet, dass es **feststellbar** ist. Insbesondere ist das Flügelrad dabei über ein Magnetfeld, bevorzugt steuerbares Magnetfeld, feststellbar. Vorteilhaft ist so bei Erreichen einer gewählten Menge an Flüssigkeit und/oder Pulver und/oder Granulat der Portioniervorgang abbrechbar, bzw. beendbar. So kann ermöglicht werden, dass eine einfache Einstellung einer Menge einer Substanz für die Bedienperson sehr unkompliziert zu einer exakten Dosierung der Substanz führt. Dies hat große Vorteile im Alltag für ältere Personen, deren Sinnesorgane eingeschränkt sind. Weiterhin bringt es auch bei einem exakten Dosieren großer Mengen bzw. bei zahlreichen Dosiervorgängen Vorteile, da diese weniger Konzentration benötigen.

Ganz besonders bevorzugt wirkt beim Feststellen des Flügelrades dabei eine Rückstellkraft auf das Flügelrad, welche dafür sorgt, dass sich in den Kammern des Flügelrades befindliche Flüssigkeit und/oder befindliches Pulver und/oder Granulat über den Einlass der Dosiervorrichtung zurück in das kippbare Gefäß befördert wird. Somit wird vorteilhaft gewährleistet, dass die sich bildenden Rückstände im Durchflussbereich des Durchflussmessers gering gehalten werden, und dass keine Abfallprodukte in Form von im Flügelrad haftender Flüssigkeit und/oder haftendem Pulver und/oder Granulat entstehen.

Der Durchflussmesser kann ein Mittel für eine adaptive Kalibrierung aufweisen. Dis erlaubt es, dass sich der Durchflussmesser automatisch an verschiedene Substanzen oder Betriebsbedingungen anpasst, indem er sich selbst kalibriert. Dies erhöht die Genauigkeit und Zuverlässigkeit über einen breiten Bereich von Betriebsbedingungen hinweg.

In einer bevorzugten Ausgestaltungsform kann ein Durchflussmesser mit einem Filterelement, wie hierin definiert, ausgestattet sein, der größere Partikel oder Verunreinigungen aus der durchfließenden Substanz entfernt, bevor sie den Messbereich erreichen.

### Anzeigeeinheit

Nach einer besonders bevorzugten Ausgestaltungsform umfasst die erfindungsgemäße Dosiervorrichtung eine Anzeigeeinheit, welche mit dem Durchflussmesser koppelbar ist. Die Anzeigeeinheit ist vorzugsweise derart ausgelegt, dass sie den erfassten Durchfluss an Flüssigkeit und/oder Pulver und/oder Granulat in einer gängigen Einheit, bevorzugt in Litern, besonders bevorzugt in Millilitern, anzeigt. Somit ist die abgegebene Menge an Flüssigkeit und/oder Pulver und/oder Granulat für den Nutzer direkt während des Portioniervorgangs ablesbar und der Prozess durch den Nutzer abbrechbar, sobald eine vorgegebene Menge erreicht ist. Vorteilhaft ermöglicht die Anzeigeeinheit dem Nutzer so einen besseren Überblick während des Portioniervorgangs, da sie sich beim Portionieren direkt in dessen Blickfeld befindet. Besonders bevorzugt handelt es sich bei der Anzeigeeinheit um ein LED und/oder OLED Display und/oder eine Flüssigkristallanzeige. Eine solche Anzeige ermöglicht es insbesondere auch bei schlechterem Sehvermögen die jeweilige Menge exakt zu erfassen.

### Schnittstelle zum Koppeln mit einer Recheneinheit/Smartphone

Gemäß einer Ausführungsform der Dosiervorrichtung ist das Messgerät mit einem mobilen Endgerät koppelbar ist, wobei das Endgerät derart ausgestaltet ist, dass es die Auswertung von übertragenen Daten, sowie das Ansteuern des Messgeräts zum Einstellen von vorgegebenen Volumina ermöglicht. Zudem ermöglicht das Koppeln mit einem Endgerät eine erweiterte und benutzerfreundliche Datenanalyse.

In einer weiteren Ausgestaltung umfasst die erfindungsgemäße Dosiervorrichtung eine Schnittstelle zum Koppeln der Dosiervorrichtung mit einer Recheneinheit. Insbesondere handelt es sich bei der Schnittstelle um eine kabellose Datenübertragungsschnittstelle, insbesondere mittels Bluetooth, WLAN oder NFC. So ermöglicht die Schnittstelle ein Übertragen von Daten an eine von der Dosiervorrichtung räumlich entfernte Recheneinheit, einschließlich mobiler und stationärer Recheneinheiten, bevorzugt eine mobile Recheneinheit, insbesondere ein Smartphone und/oder Tablet und/oder einen Laptop. Auch die Übertragung von Daten an eine räumlich entfernte, stationäre Recheneinheit, bspw. einen Desktop, oder auch ein virtuelles Rechensystem, insbesondere eine Cloud, ist durch die Schnittstelle ermöglicht.

Nach einer vorteilhaften Ausgestaltung weist die Recheneinheit, vorzugsweise die mobile Recheneinheit, eine separate Anzeigeeinheit auf, auf welcher der erfasste Durchfluss der Substanz, insbesondere der Flüssigkeit und/oder des Pulvers und/oder des Granulats in einer gängigen Einheit, bevorzugt in Litern, besonders bevorzugt in Millilitern, und/oder in einer Einheit einer Masse, insbesondere in Gramm und/oder in Kilogramm, angezeigt wird. Dies gewährleistet für den Nutzer eine transparente und sofortige Überwachung.

Nach einer besonders bevorzugten Ausgestaltung ist das Portionieren und/oder Abmessen von Flüssigkeiten und/oder Pulvern und/oder Granulaten über die Schnittstelle mittels einer Recheneinheit einstellbar und/oder steuerbar. Besonders bevorzugt ist zum Einstellen und/oder Steuern des Dosierens ein Computerprogrammprodukt vorgesehen, insbesondere eine App, welches auf einem von der Recheneinheit umfassten Speichermedium hinterlegt ist. Insbesondere ist über das Computerprogrammprodukt zumindest eine Stoffeigenschaft der zu portionierenden Substanz, bspw. die Dichte, Viskosität oder Korngröße einstellbar und an die Dosiervorrichtung übertragbar. Somit ist vorteilhaft das kontaktlose Einstellen der Dosiervorrichtung zum Portionieren und/oder Abmessen von Stoffen mit unterschiedlichen Stoffeigenschaften ermöglicht.

Nach einer besonders bevorzugten Ausgestaltung umfasst das Computerprogrammprodukt eine Datenbank. Die Datenbank ist derart ausgestaltet, dass in dieser in einem Speicherbereich auf dem von der Recheneinheit umfassten Speichermedium eine Liste hinterlegt ist, welche zumindest einen Stoff bzw. eine Substanz umfasst, dessen bzw. deren Eigenschaften, insbesondere Dichte, Viskosität oder Korngröße, in der Datenbank dem Stoff bzw. der Substanz zugeordnet hinterlegt sind. Die Stoffeigenschaften bzw. Substanzeigenschaften in der Datenbank sind über das Computerprogrammprodukt durch einen Auswahlmechanismus abrufbar und an die Dosiervorrichtung übertragbar. Vorteilhaft kann so eine Vielzahl an unterschiedlichen Stoffeigenschaften im Bedarfsfall an die Dosiervorrichtung übertragen werden, wodurch eine vielseitige und präzise Dosierung ermöglicht wird.

In einer Ausgestaltung handelt es sich bei dem Auswahlmechanismus um einen an einen Sensor gebundenen Mechanismus. Dabei ist der Sensor derart ausgestaltet, dass es sich bei ihm um einen optischen und/oder haptischen und/oder akustischen Sensor handelt. Der Sensor ist derart eingerichtet, dass er das Erkennen eines zu dosierenden Stoffes ermöglicht. Somit ist das Dosieren vorteilhaft automatisch an den individuellen Stoff anpassbar.

Nach einer weiteren Ausgestaltung umfasst die durch die Schnittstelle mit der Dosiervorrichtung gekoppelte Recheneinheit eine Eingabevorrichtung zum Eingeben von Parametern, bspw. eines Stoffes, einer Menge, einer Einheit, einer Dichte, einer Viskosität oder einer Korngröße. Somit ist das Eingeben von Parametern für das Portionieren und/oder Abmessen eines Stoffes durch den Nutzer möglich. Bspw. kann der Nutzer eine zu dosierende Stoffmenge eines Stoffes in einer gängigen Einheit, bspw. 100 g und einen zu dosierenden Stoff, bspw. Öl, eingeben, um das Dosieren zu steuern. Es ist dem Nutzer so aber auch möglich, Eigenschaften eines Stoffes oder einen in der Datenbank des Computerprogrammproduktes nicht hinterlegten Stoff zu ergänzen und/oder Stoffeigenschaften zu verändern. Somit ist ein Aktualisieren und Ergänzen der Datenbank durch den Nutzer bei Gebrauch der Dosiervorrichtung möglich, um eine größere Fülle an Stoffen portionieren und/oder Abmessen zu können und/oder die Präzision des Portionierens und/oder Abmessens zu erhöhen.

Nach einer weiteren Ausgestaltung der Erfindung ist die durch die Schnittstelle mit der Dosiervorrichtung gekoppelte Recheneinheit in die Dosiervorrichtung integriert. Insbesondere handelt es sich bei der Recheneinheit um einen Mikroprozessor, vorzugsweise um einen programmierbaren Mikroprozessor, oder einen Mikrocontroller. In dieser Ausgestaltung weist die in die Dosiervorrichtung integrierte Recheneinheit zudem ein Speichermedium auf, auf welchem eine Datenbank hinterlegt ist, wobei die Datenbank derart ausgestaltet ist, dass in dieser in einem Speicherbereich auf dem von der Recheneinheit umfassten Speichermedium eine Liste hinterlegt ist, welche zumindest einen Stoff bzw. eine Substanzumfasst, dessen Eigenschaften, insbesondere Dichte, Viskosität oder Korngröße, in der Datenbank dem Stoff bzw. der Substanz zugeordnet hinterlegt sind. Somit ist vorteilhaft ermöglicht, dass ohne das Koppeln einer separaten Recheneinheit direkt mittels der Dosiervorrichtung die Eigenschaften einer Substanz, bzw. eines Stoffes abrufbar sind.

### System

Die Aufgabe wird auch durch ein System zum exakten Abmessen und/oder Portionieren einer Substanz gelöst, welches eine erfindungsgemäße Dosiervorrichtung aufweist. Ferner weist das System ein kippbares Gefäß, vorzugsweise wenigstens zwei kippbare Gefäße, auf. Dabei ist der Auslass des kippbaren Gefäßes reversibel, dicht mit dem Einlass der Dosiervorrichtung verbindbar. Dabei können vorzugsweise mehrere kippbare Gefäße abwechselnd mit der Dosiervorrichtung verbunden werden. Vorteilhaft können somit nacheinander verschiedene Substanzen, die in unterschiedlichen kippbaren Gefäßen aufbewahrt werden, abgemessen und portioniert werden. Zudem ermöglicht es die Integration mehrerer Gefäße dem Nutzer, eine breite Palette von Substanzen ohne den ständigen Bedarf an Gerätewechseln zu verarbeiten. Darüber hinaus kann der Betrieb durch die sequenzielle Breitstellung und/oder Verarbeitung verschiedener Substanzen ohne längere Unterbrechungen fortgesetzt werden, was die Durchsatzrate steigert.

Nach einer vorteilhaften Ausgestaltung weisen die Auslässe der kippbaren Gefäße eine Form, bevorzugt identische Form, auf, welche sämtlich mit demselben Einlass der Dosiervorrichtung verbindbar sind. Dadurch kann ein schneller Wechsel zwischen den verschiedenen kippbaren Gefäßen gewährleistet werden , wodurch eine effiziente sequenzielle Abmessung und Portionierung verschiedener Substanzen gewährleistet wird. Zudem minimiert ein nahtloser Wechsel den manuellen Aufwand und reduziert das Risiko von Bedienungsfehlern.

Eine weitere Ausgestaltung des Systems sieht vor, dass verschiedene kippbare Gefäße unterschiedliche Auslässe aufweisen, welche mit verschiedenen Einlässen der Dosiervorrichtung reversibel, dicht verbindbar sind, also zu verschiedenen Einlässen korrespondierend ausgebildet sind. So können unterschiedliche Formen und Größen der kippbaren Gefäße einfach realisiert werden. Weiterhin kann ein geeigneter Auslass an eine Substanz angepasst ausgebildet sein. Beispielsweise eignen sich für Flüssigkeiten Auslässe, welche ein leichtes Ausgießen ermöglichen, wie eine Tülle, wobei Auslässe für Schüttgüter in der Regel breiter und größer ausgebildet sind. Die Möglichkeit, verschiedene kippbare Gefäße mit variablen Auslässen zu verwenden, die an verschiedene Einlässe der Dosiervorrichtung angepasst sind, bietet eine hohe Anpassungsfähigkeit der Dosiervorrichtung an verschiedene Substanzen und deren spezifische physikalische Eigenschaften. Zudem können durch die Verwendung einer einzigen Dosiervorrichtung für verschiedene Substanzen Kosten für zusätzliche spezialisierte Geräte eingespart werden.

Die Erfindung umfasst ein System zum exakten Abmessen und/oder Portionieren einer Substanz, wobei das System eine hierin definierte Dosiervorrichtung und wenigstens ein Kippbares Gefäß (6), vorzugsweise wenigstens zwei kippbare Gefäße (6) aufweist, wobei der Auslass des kippbaren Gefäßes (6) reversibel, dicht mit dem Einlass (1) der Dosiervorrichtung verbindbar ist. Eine solche dichte Verbindung verhindert Leckagen und somit das Eindringen von Verunreinigungen, was die Qualität der verarbeiteten Substanzen sicherstellt. Gleichzeitig ermöglicht es die reversible Verbindung Nutzern, bei Bedarf schnell zwischen verschiedenen Substanzen zu wechseln.

Die Erfindung umfasst auch ein System zum exakten Abmessen und/oder Portionieren einer Substanz, aufweisend eine erfindungsgemäße Dosiervorrichtung, wenigstens zwei kippbare Gefäße und wenigstens einen zusätzlichen Einlass der Dosiervorrichtung zum Austausch des mit der Dosiervorrichtung verbundenen Einlasses. Dabei ist jeder Auslass des kippbaren Gefäßes derart zu einem Einlass der Dosiervorrichtung korrespondierend ausgebildet, dass der Auslass des kippbaren Gefäßes reversibel, dicht mit dem Einlass der Dosiervorrichtung verbindbar ist. Bevorzugt kann dann jeweils ein Einlass der Dosiervorrichtung mit einem Auslass eines der kippbaren Gefäße verbunden sein. Bevorzugt weist das System wenigstens zwei, besonders bevorzugt wenigstens drei, noch mehr bevorzugt wenigstens vier unterschiedliche Gefäße auf, welche mittels austauschbarer Einlässe mit der Dosiervorrichtung reversibel und dicht verbindbar sind. Dafür weist das System vorzugsweise zwei, bevorzugt wenigstens drei, besonders bevorzugt wenigstens vier austauschbare Einlässe auf. Mit der Möglichkeit, verschiedene Gefäße anzuschließen, kann das System leicht skaliert werden, um größere Mengen oder verschiedene Substanzen zu verarbeiten. Durch austauschbare Einlässe kann das System zudem leicht aktualisiert oder erweitert werden, bspw. um zukünftige Anforderungen zu erfüllen.

### Verfahren

Die vorliegende Erfindung umfasst zudem ein Verfahren zum **Abmessen** von Mengen von Substanzen, vorzugsweise von Flüssigkeiten und/oder Pulvern und/oder Granulaten, unter Verwendung der hierin beschriebenen Dosiervorrichtung, umfassend die folgenden Schritte:
a. Bereitstellen (S01) einer zu portionierenden Substanz, vorzugsweise einer zu portionierenden Flüssigkeit und/oder eines zu portionierenden Pulvers und/oder Granulates, in einem kippbaren Gefäß wie hierin definiert;
b. Verbinden (S02) einer Dosiervorrichtung wie hierin beschrieben am Auslass des kippbaren Gefäßes;
c. Koppeln (S03) der Dosiervorrichtung mit einer Recheneinheit, wobei bspw. die Möglichkeit, die Dosiervorrichtung mit einer Recheneinheit zu verbinden, Mobilität und Benutzerfreundlichkeit bietet;
d. Induzieren (S04) einer Bewegung der Substanz durch die Dosiervorrichtung, wobei verschiedene Methoden zum Induzieren der Bewegung der Substanz Anpassungsfähigkeit an verschiedene Substanzen und Anwendungen bieten, zudem kann vorgesehen sein, dass die Geschwindigkeit und Menge der Substanz, die durch die Dosiervorrichtung fließt, durch verschiedene Mechanismen, wie Neigen oder Pumpen, reguliert werden,
   vorzugsweise mittels Neigen des Verbundes aus der Dosiervorrichtung und des mit der Dosiervorrichtung verbundenen kippbaren Gefäßes, sodass die Substanz aufgrund der vorhandenen Schwerkraft durch den Auslass des kippbaren Gefäßes in die Dosiervorrichtung fließt;
e. Ermitteln der Menge (S05), vorzugsweise des Volumens, der durch das Messgerät, vorzugsweise den Durchflussmesser und/oder den Durchflusszähler, geflossenen Substanz mittels des Messgerätes, was eine präzise Bestimmung der durchgeflossenen Menge ermöglicht;
f. Weiterleiten (S06) der ermittelten Menge der Substanz an die Recheneinheit, sodass das Übertragen der gemessenen Daten an die Recheneinheit vorteilhaft eine sofortige Auswertung und Anzeige ermöglicht;
g. Anzeigen (S07) der durchgeflossenen Menge der Substanz mittels der Anzeigeeinheit der Dosiervorrichtung und/oder mittels einer separaten Anzeigeeinheit, was dem Nutzer einerseits eine klare und direkte Rückmeldung über die durchgeflossene Menge bietet und der Nutzer zugleich digital und/oder manuell in den Portioniervorgang eingreifen (bspw. beenden) kann, was Flexibilität und Kontrolle über den Dosierungsprozess bietet.

Vorzugsweise erfolgt das Verbinden (S02) der Dosiervorrichtung hierbei durch Aufschrauben und/oder Aufstecken des Einlasses der Dosiervorrichtung auf das kippbare Gefäß, wobei eine dichte Verbindung zwischen dem Auslass des kippbaren Gefäßes und dem Einlass der Dosiervorrichtung herstellbar ist. So ist gewährleistet, dass beim Portionieren des vorgegebenen Volumens einer Flüssigkeit und/oder eines Pulvers und/oder eines Granulates kein Stoff nach außen, also am Einlass der Dosiervorrichtung vorbei dringt. Besonders bevorzugt erfolgt das Verbinden der Dosiervorrichtung und des kippbaren Gefäßes hierbei über einen als Aufsatz ausgestalteten Einlass der Dosiervorrichtung, wobei dieser derart gestaltet ist, dass er austauschbar ist. Somit ist vorteilhaft eine Vielzahl von kippbaren Gefäßen dicht mit der Dosiervorrichtung verbindbar.

Das Koppeln (S03) der Dosiervorrichtung mit einer Recheneinheit erfolgt vorzugsweise drahtlos, insbesondere über Bluetooth, WLAN, NFC oder einen anderen drahtlosen Übertragungsstandard. Bei der Recheneinheit handelt es sich bevorzugt um eine mobile Recheneinheit, insbesondere ein Smartphone, Tablet oder einen Laptop, umfassend ein **Computerprogrammprodukt,** vorzugsweise eine App, welches Instruktionen enthält, die einen Datenaustausch zwischen der Recheneinheit und der Dosiervorrichtung ermöglichen. Insbesondere ermöglicht das Computerprogrammprodukt das Verarbeiten von Nutzereingaben, welche von der Recheneinheit erfasst werden, sodass eine Eingabe bezüglich der vorgegebenen Menge an zu portionierender Flüssigkeit und/oder Pulver und/oder Granulat durch den Nutzer an die Recheneinheit kommunizierbar ist und über das Computerprogrammprodukt auswertbar und an die Dosiervorrichtung übertragbar ist. Besonders bevorzugt ist das Computerprogrammprodukt derart ausgestaltet, dass es das Übertragen der erfassten Menge von einer zum Bemessen eines Volumens geeigneten Einheit in eine andere Einheit, vorzugsweise auch in eine Einheit einer Masse, ermöglicht. Beispielsweise ist das Übertragen der angegebenen Menge in Millilitern in eine Angabe in Gramm durchführbar. Somit ist es dem Nutzer möglich, über das Computerprogrammprodukt komfortabel eine beliebige Menge an Flüssigkeit und/oder Pulver und/oder Granulat in einer beliebigen Einheit, insbesondere eines Volumens und/oder einer Masse, anzugeben, um diese mittels der Dosiervorrichtung abzumessen.

Zum Starten der Abgabe einer Substanz, insbesondere Flüssigkeit und/oder Pulver und/oder Granulat, erfolgt das Induzieren (S04) einer Bewegung der Substanz durch die Dosiervorrichtung, vorzugsweise mittels Neigen des Verbundes aus der Dosiervorrichtung und des mit der Dosiervorrichtung verbundenen kippbaren Gefäßes, sodass die Substanz aufgrund der vorhandenen Schwerkraft durch den Auslass des kippbaren Gefäßes in die Dosiervorrichtung fließt. Dabei ist die Geschwindigkeit des Flusses durch die Neigung des Verbunds aus Dosiervorrichtung und kippbarem Gefäß einstellbar.

Nach einer vorteilhaften Ausgestaltung erfolgt das Induzieren einer Bewegung der Substanz durch die Dosiervorrichtung durch Pumpen der Substanz in die Dosiervorrichtung, wobei eine äußere Kraft aufgewendet wird, um die Substanz in Bewegung zu versetzen. Dabei ist die Menge an Substanz, die durch die Dosiervorrichtung bewegt wird, durch die Anzahl an Pumpstößen und/oder den Hub der Pumpe regulierbar.

Nach einer weiteren möglichen Ausgestaltung erfolgt das Induzieren einer Bewegung der Substanz durch die Dosiervorrichtung mittels Einleiten von Luft oder einem beliebigen anderen Gas oder Gasgemisch in das kippbare Gefäß, sodass die Substanz durch den Luftdruck durch die Dosiervorrichtung bewegt wird, wobei diese Ausgestaltung vorzugsweise zum Dosieren von Flüssigkeiten verwendet wird. Dabei ist die Menge und die Geschwindigkeit des Dosierens der Flüssigkeit durch das eingeleitete Volumen an Luft oder einem beliebigen anderen Gas oder Gasgemisch, welches in das kippbare Gefäß eingeleitet wird, regulierbar.

Im Schritt (S05) erfolgt das Ermitteln der Menge, vorzugsweise des Volumens, der durch das Messgerät, vorzugsweise den Durchflussmesser und/oder den Durchflusszähler, geflossenen Substanz mittels des Messgerätes. Daran anschließend erfolgt das Weiterleiten (S06) des so bestimmten Durchflusses an die vorzugsweise drahtlos mit der Dosiervorrichtung verbundene Recheneinheit, besonders bevorzugt mittels Bluetooth, WLAN, NFC oder einen anderen drahtlosen Übertragungsstandard verbundene Recheneinheit. Der übertragene Durchfluss ist durch ein auf einem von der Recheneinheit umfassten Speichermedium hinterlegten Computerprogrammprodukt auswertbar und gegebenenfalls in ein Volumen umrechenbar. Bevorzugt greift das Computerprogrammprodukt hierfür auf durch den Nutzer eingegebene und/oder in einer Tabelle auf dem Speichermedium hinterlegte Daten bezüglich der Stoffeigenschaften der zu portionierenden Flüssigkeit und/oder des Pulvers und/oder des Granulates zurück, sodass vorteilhaft ein besonders präzises Bestimmen des portionierten Volumens ermöglicht wird.

Zuletzt erfolgt das Anzeigen (S07) der durchgeflossenen Menge der Substanz mittels der Anzeigeeinheit der Dosiervorrichtung und/oder mittels einer separaten Anzeigeeinheit, wobei die separate Anzeigeeinheit in einem Ausführungsbeispiel eine von der gekoppelten Recheneinheit umfasste Anzeigeeinheit ist. Somit ist die abgegebene Menge an Substanz, insbesondere Flüssigkeit und/oder Pulver und/oder Granulat für den Nutzer in einer vorgegebenen Einheit ablesbar. Der Portioniervorgang ist durch den Nutzer manuell beendbar, sobald eine vorgegebene Menge an Flüssigkeit und/oder Pulver und/oder Granulat erreicht ist. Vorteilhaft kann so ein flexibles Portionieren und/oder Abmessen realisiert werden, wobei der Nutzer die Menge an Flüssigkeit und/oder Pulver und/oder Granulat variieren kann, je nachdem, was der jeweilige Anwendungszweck bedarf, wobei aber dennoch gewährleistet ist, dass das abgegebene Volumen an Flüssigkeit und/oder Pulver und/oder Granulat genau quantifizierbar ist.

Die Erfindung umfasst weiterhin auch ein Verfahren zum Abmessen einer vorgegebenen Menge einer Substanz, vorzugsweise von Flüssigkeiten und/oder Pulvern und/oder Granulaten, unter Verwendung der erfindungsgemäßen Dosiervorrichtung und einem kippbaren Gefäß, umfassend die folgenden Schritte:
a. Bereitstellen (S01) einer zu portionierenden Substanz, vorzugsweise einer zu portionierenden Flüssigkeit und/oder eines zu portionierenden Pulvers und/oder Granulates, in einem kippbaren Gefäß wie hierin definiert;
b. Verbinden (S02) einer Dosiervorrichtung wie hierin beschrieben am Auslass des kippbaren Gefäßes;
c. Koppeln (S03) der Dosiervorrichtung mit einer Recheneinheit;
d. Übermitteln (S03a) einer vorgegebenen Menge, vorzugsweise eines Volumens und/oder einer Masse, der abzumessenden Flüssigkeit und/oder des abzumessenden Pulvers und/oder Granulates an die Recheneinheit;
e. Induzieren (S04) einer Bewegung der Substanz durch die Dosiervorrichtung,
   vorzugsweise mittels Neigen des Verbundes aus der Dosiervorrichtung und des mit der Dosiervorrichtung verbundenen kippbaren Gefäßes, sodass die Substanz aufgrund der vorhandenen Schwerkraft durch den Auslass des kippbaren Gefäßes in die Dosiervorrichtung fließt,
   nach einer vorteilhaften Ausgestaltung durch Pumpen der Substanz in die Dosiervorrichtung,
   nach einer möglichen Ausgestaltung mittels Einleiten von Luft in das kippbare Gefäß, sodass die Substanz durch den Luftdruck durch die Dosiervorrichtung bewegt wird;
f. Ermitteln der Menge (S05) der durch das Messgerät geflossenen Substanz mittels des Messgerätes;
g. Weiterleiten (S06) der ermittelten Menge der Substanz an die Recheneinheit;
h. Vergleichen (S06a) der ermittelten Menge mit der vorgegebenen Menge;
i. Automatisches Abbrechen (S06b) bei Erreichen der vorgegebenen Menge der zu portionierenden Flüssigkeit und/oder des zu portionierenden Pulvers und/oder Granulates.

Dabei können einzelne Schritte, insbesondere die Schritte f., g. und h, wiederholt durchgeführt werden, bis die vorgegebene Menge erreicht ist.

Vorzugsweise umfasst das Verfahren auch den Schritt des Anzeigens (S07) der durchgeflossenen Menge der Substanz mittels der Anzeigeeinheit der Dosiervorrichtung und/oder mittels einer separaten Anzeigeeinheit. Bevorzugt erfolgt dieser Schritt (S07) ab dem Koppeln (S03). Nach einer möglichen Ausgestaltung erfolgt das Anzeigen (S07) ab dem Ermitteln der Menge (S06), bevorzugt ab dem automatischen Abbrechen (S06b).

In einer dieser Ausgestaltung des hierin beschriebenen Verfahrens erfolgt anschließend an den Schritt (S03) der Schritt des Übermittelns (S03a) vorzugsweise eines Volumens und/oder einer Masse, der abzumessenden Flüssigkeit und/oder des abzumessenden Pulvers und/oder Granulates an die Recheneinheit. Dabei kann das Übermitteln durch eine Eingabe am Dosiergerät, eine Instruktion eines Computerprogrammprodukts oder eine Eingabe an der gekoppelten Recheneinheit selbst erfolgen, wobei die vorgegebene Menge im Anschluss an das Übermitteln auf einem Speicherbereich der gekoppelten Recheneinheit hinterlegt ist. Für den Nutzer ist somit eine genaue Menge abzugebender Substanz vor dem Dosiervorgang festlegbar.

Die vorgegebene Menge kann auch eine Masse sein, wobei dann zusätzlich die substanzspezifischen Daten an die Recheneinheit weitergeleitet werden müssen, sodass daraus das vorgegebene Volumen bestimmt wird. Dabei wird der Portioniervorgang auch bei Erreichen des vorgegebenen Volumens beendet.

In einer besonders bevorzugten Ausgestaltung umfasst das Verfahren zum Dosieren von Substanzen, insbesondere Flüssigkeiten und/oder Pulvern und/oder Granulaten, unter Verwendung der hierin beschriebenen Dosiervorrichtung das Verwenden einer Recheneinheit umfassend ein Speichermedium, welches derart ausgestaltet ist, dass auf dem Speichermedium Informationen hinterlegt sind, welche das Bestimmen einer Menge, vorzugsweise eines Volumens, einer Substanz, insbesondere einer Flüssigkeit und/oder eines Pulvers und/oder eines Granulates, ermöglichen. Insbesondere sind auf dem Speichermedium Daten bezüglich der Korngröße, der Viskosität, der Dichte und/oder beliebiger anderer Substanzeigenschaften, welche zum rechnerischen Bestimmen der Masse, bzw. des Volumens einer Flüssigkeit und/oder eines Pulvers und/oder Granulates aus dem Durchfluss benötigt werden. Insbesondere sind auch Substanzeigenschaften hinterlegt, die das Berechnen der Masse, bzw. des Volumens eines Pulvers und/oder eines Granulats unter Berücksichtigung der Kompressibilität und/oder etwaiger Lufteinschlüsse während des Dosiervorgangs ermöglichen. Im Gegensatz zu einer Flüssigkeit, welche beispielsweise die Kammern eines Flügelrads während des Dosiervorgangs vollständig füllt, ergeben sich durch die Beschaffenheit, insbesondere die Körnung, eines Pulvers und/oder eines Granulates während des Füllens der Kammern eines Flügelrads Lufteinschlüsse, welche sich auf die während des Dosiervorgangs abgegebene Menge des Pulvers und/oder Granulats auswirken. Vorzugsweise wird die dadurch entstehende Abweichung mittels eines auf dem Speichermedium der Recheneinheit hinterlegten Korrekturfaktors berücksichtigt und korrigiert. Besonders bevorzugt sind die Informationen zum Bestimmen eines Volumens einer Flüssigkeit und/oder eines Pulvers und/oder eines Granulates durch ein Computerprogrammprodukt les- und/oder veränderbar hinterlegt. Somit ist ein rechnerisches Bestimmen des abgegebenen Volumens durch die Recheneinheit in Verbindung mit dem Computerprogrammprodukt, wie oben erwähnt, möglich. Vorzugsweise ist es zudem für den Nutzer möglich, Eigenschaften einer weiteren Substanz und/oder Substanzgruppe hinzuzufügen oder weitere Eigenschaften einer bereits hinterlegten Substanz und/oder Substanzgruppe um einen Eintrag zu erweitern. Beispielsweise kann der Nutzer spezielle Körnungen eines Pulvers oder eines Granulates angeben, sodass diese für die Berechnung zur Verfügung stehen. Vorteilhaft ermöglicht ein solcher Aufbau ein flexibles Bestimmen der abgegebenen Stoffmenge in Echtzeit, sowie ein breites Einsatzspektrum der Dosiervorrichtung, da stets Informationen bezüglich eines bestimmten Stoffes hinzufügbar sind. Darüber hinaus ist eine präzise Berechnung der abgegebenen Stoffmenge basierend auf den Stoffeigenschaften und den physikalisch messbaren Eigenschaften des Durchlaufmessers bzw. -zählers (Abmessungen, Umdrehungen) möglich.

Nach einer bevorzugten Ausgestaltung des Erfindungsgemäßen Verfahrens umfasst das Verfahren als einen Schritt das Vergleichen (S06a) der durch das von der Dosiervorrichtung aufgewiesenen Messeinrichtung ermittelten Menge mit der vorgegebenen Menge durch die gekoppelte Recheneinheit. Somit wird festgestellt, ob die vorgegebene Menge an Substanz, insbesondere Flüssigkeit und/oder Pulver und/oder Granulat bereits erreicht wurde.

Automatisches Abbrechen (S06b) bei Erreichen der vorgegebenen Menge der zu portionierenden Flüssigkeit und/oder des zu portionierenden Pulvers und/oder Granulates
Das hierin offenbarte Verfahren zum Portionieren und/oder Abmessen von Flüssigkeiten und/oder Pulvern und/oder Granulaten unter Verwendung der hierin beschriebenen Dosiervorrichtung weist nach einer weiteren bevorzugten Ausgestaltung den Schritt des automatischen Abbrechens (S06b) des Portioniervorgangs bei Erreichen der vorgegebenen Menge der zu portionierenden Substanz, insbesondere der zu portionierenden Flüssigkeit und/oder des zu portionierenden Pulvers und/oder Granulates, durch die Dosiervorrichtung auf. Insbesondere ist der Portioniervorgang dadurch beendbar, dass der Durchflussmesser/- zähler feststellbar ist, wobei feststellbar im Sinne der Erfindung bedeutet, dass keine Flüssigkeit und/oder kein Pulver und/oder kein Granulat vom Einlass der Dosiervorrichtung zum Auslass der Dosiervorrichtung transportiert wird. Nach einer vorteilhaften Ausgestaltung wird dafür ein Ventil verwendet. Besonders bevorzugt ist der Durchflussmesser/-zähler derart feststellbar, dass ein Mechanismus, bevorzugt ein Magnetfeld, aktivierbar ist. Insbesondere ist der Mechanismus über ein Signal aktivierbar, welches über eine drahtlos mit der Dosiervorrichtung verbundene Recheneinheit, vorzugsweise mittels Bluetooth, WLAN, NFC oder einen anderen drahtlosen Übertragungsstandard verbundene Recheneinheit, an die Dosiervorrichtung übertragbar ist. Somit ist der Dosiervorgang automatisch durch eine Nutzereingabe beendbar, wodurch vorteilhaft gewährleistet ist, dass die exakte Menge an Flüssigkeit und/oder Pulver und/oder Granulat abgemessen wird, ohne dass der Nutzer zum richtigen Zeitpunkt manuell den Prozess unterbricht. Dadurch wird eine genaue Dosierung ermöglicht und es entsteht kein Abfall oder Überschuss durch eine zu große Menge abgegebenen Volumens.

Gemäß einer bevorzugten Ausgestaltung umfasst die Dosiervorrichtung eine Ventilvorrichtung, wobei die Ventilvorrichtung zum Unterbinden eines Durchflusses der Substanz in einem Durchflusskanal, welchen die Substanz durchfließt, angeordnet ist, wobei die Ventilvorrichtung derart mit dem Messgerät gekoppelt ist, dass der Durchfluss der Substanz durch die Dosiervorrichtung nach einem Durchfluss eines vorgegebenen Volumens unterbindbar ist.

In einer weiteren Ausführungsform ist die Ventilvorrichtung in das Messgerät integriert.

### Ausführungsbeispiele

Anhand folgender Figuren und Ausführungsbeispiele wird die vorliegende Erfindung näher erläutert, ohne die Erfindung auf diese zu beschränken.
- **Fig. 1**: Schematische Darstellung der Dosiervorrichtung
- **Fig. 2**: Schematische Darstellung des Einlasses der Dosiervorrichtung
- **Fig. 3**: Illustration des Prinzips des Koppelns der Dosiervorrichtung mit einer Recheneinheit

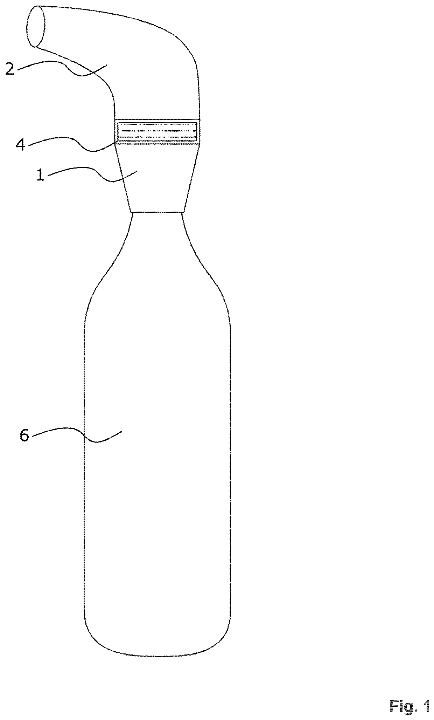

Dabei zeigt **Fig. 1** eine schematische Darstellung der Dosiervorrichtung nach Anspruch 1, umfassend einen Einlass (1), welcher derart ausgestaltet ist, dass er mit einem kippbaren Gefäß (6), welches eine Substanz, vorzugsweise eine Flüssigkeit und/oder ein Pulver und/oder ein Granulat, beinhaltet, verbindbar, gemäß diesem Ausführungsbeispiel bspw. verschraubbar, ist. Dadurch ergibt sich eine dichte Verbindung zwischen dem kippbaren Gefäß (6) und dem Einlass (1) der Dosiervorrichtung, welche reversibel ist. In diesem Ausführungsbeispiel ist der Einlass (1) beispielhaft aus Metall ausgefertigt. Weiterhin umfasst die erfindungsgemäße Dosiervorrichtung einen Dosiervorrichtungsauslass (2), insbesondere einen biegbaren Dosiervorrichtungsauslass (2), welcher in diesem Ausführungsbeispiel lediglich beispielhaft aus einem Elastomer hergestellt ist. Dadurch wird vorteilhaft gewährleistet, dass das portionierte Volumen der Substanz, insbesondere der Flüssigkeit und/oder des Pulvers und/oder des Granulats, welches sich im kippbaren Gefäß (6) befindet, präzise und ohne Verlust, bspw. durch Verschütten, in ein weiteres Gefäß, beispielsweise ein Mischgefäß zum Vermischen von Zutaten beim Backen, übertragbar ist. Die erfindungsgemäße Dosiervorrichtung umfasst in diesem Beispiel zudem einen Durchflussmesser (3) zum Bestimmen und Überprüfen des die Dosiervorrichtung durchfließenden Volumens. In diesem Ausführungsbeispiel ist der Durchflussmesser (3) derart ausgeführt, dass er ein Flügelrad umfasst. Durch die vordefinierten Volumina an Flüssigkeit und/oder Pulver und/oder Granulat, welche das Flügelrad mit einer Umdrehung befördert, ist ein einfaches Berechnen des Gesamtvolumens realisierbar. Zusätzlich ist das geförderte Volumen rasch bestimmbar, sodass ein präzises und schnelles Portionieren und/oder Abmessen durch die Dosiervorrichtung ermöglicht wird. Darüber hinaus ist auch eine beliebige Menge an Flüssigkeit und/oder Pulver und/oder Granulat abmessbar, da der Portioniervorgang nicht in diskreten Schritten erfolgt und auch nicht durch etwaige einschränkende Abmessungen einer Vorportionierkammer beschränkt ist. Weiterhin umfasst die erfindungsgemäße Dosiervorrichtung eine Anzeigeeinheit, insbesondere eine Flüssigkristallanzeige (LCD), welche derart eingerichtet ist, dass sie das abgegebene Volumen der Flüssigkeit und/oder des Pulvers und/oder Granulates oder aber nach entsprechender Umrechnung durch eine optional vorhandene Recheneinheit die Masse in einer gängigen Größeneinheit anzeigt. Somit ist für den Nutzer beim Verwenden der Dosiervorrichtung sofort einsehbar, welches Volumen oder welche Masse während des Portioniervorgangs abgegeben wird und der Prozess ist durch den Nutzer an geeigneter Stelle beendbar.

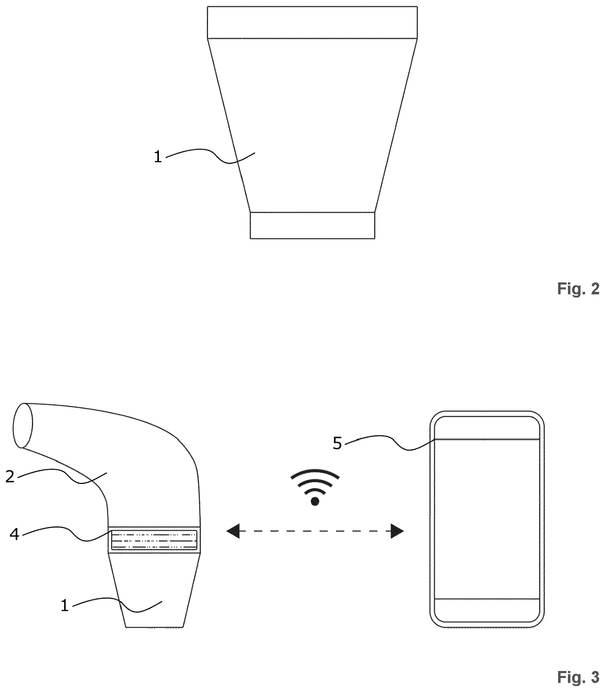

**Fig. 2** beinhaltet eine Darstellung des Einlasses (1) der Dosiervorrichtung, welcher in diesem Ausführungsbeispiel als Steckverschluss ausgeführt ist. Insbesondere ist der Einlass (1) in diesem Ausführungsbeispiel als Aufsatz ausgeführt, der mit dem Körper, also dem weiteren Abschnitt, der erfindungsgemäßen Dosiervorrichtung auf der einen Seite, und dem Auslass eines kippbaren Gefäßes (6) auf der anderen Seite dicht verbindbar ist, sodass keine Flüssigkeit und/oder kein Pulver und/oder kein Granulat während des Portioniervorgangs nach außen dringt und sich die Verbindung der Elemente beim Kippen des kippbaren Gefäßes (6) nicht löst. In dieser bevorzugten Ausgestaltung handelt es sich um einen Einlass (1), welcher aus einem elastischen Material gefertigt ist, insbesondere aus einem Elastomer oder einem Silikon. Somit ergibt sich vorteilhaft eine reversible Verformbarkeit des Einlasses (1), sodass dieser in eine für die Anwendung vorteilhafte Raumrichtung, angepasst an die Umgebung, in der die Dosiervorrichtung eingesetzt wird, biegbar ist, um den Portioniervorgang zu vereinfachen und sicherzustellen, dass das portionierte Volumen an Flüssigkeit und/oder Pulver und/oder Granulat ohne Verlust in ein weiteres Gefäß transferierbar ist.

**Fig. 3** illustriert skizzenhaft das Koppeln der erfindungsgemäßen Dosiervorrichtung wie in Fig. 1 mit einer Recheneinheit (5). In dieser Ausführungsform umfasst die erfindungsgemäße Dosiervorrichtung eine Schnittstelle zur drahtlosen Datenübertragung zwischen der Dosiervorrichtung und einer Recheneinheit (5), insbesondere ein WLAN-Modul. Die Schnittstelle ermöglicht das Übertragen der durch den von der erfindungsgemäßen Dosiervorrichtung umfassten Durchflussmesser gemessenen Daten zum Durchfluss einer Flüssigkeit und/oder eines Pulvers und/oder Granulates an die Recheneinheit (5). In diesem Ausführungsbeispiel handelt es sich bei der Recheneinheit beispielhaft um ein Smartphone. Die Recheneinheit (5) ist dabei derart ausgestaltet, dass sie ein Speichermedium umfasst, auf welchem ein Computerprogrammprodukt hinterlegt ist. Das Speichermedium ist dazu eingerichtet, die von der Dosiervorrichtung empfangenen Daten zu speichern und für das Computerprogrammprodukt auslesbar zu hinterlegen. Das Computerprogrammprodukt umfasst Instruktionen zum Berechnen des Volumens an Flüssigkeit und/oder Pulver und/oder Granulat basierend auf den empfangenen Daten, wobei das Computerprogrammprodukt insbesondere derart ausgestaltet ist, dass es ein Umrechnen des gemessenen Volumens in eine andere gängige Einheit, bspw. eine Masse, ermöglicht. Weiterhin ist das Computerprogrammprodukt derart ausgestaltet, dass es eine Eingabe, beispielsweise durch einen Nutzer, ermöglicht, durch welche eine vorgegebene Menge an Flüssigkeit und/oder Pulver und/oder Granulat festlegbar ist. Somit ist eine flexible und komfortable Eingabe einer beliebigen Menge an Flüssigkeit und/oder Pulver und/oder Granulat durch den Nutzer realisierbar und der Portionierprozess mittels der Recheneinheit kontrollierbar.

Bevorzugt umfasst die erfindungsgemäße Dosiervorrichtung in dieser Ausgestaltung zudem einen Mechanismus, welcher den Portioniervorgang automatisch beendet, sobald eine vorgegebene Menge an Substanz, insbesondere an Flüssigkeit und/oder Pulver und/oder Granulat erreicht ist. Die vorgegebene Menge an Substanz, insbesondere an Flüssigkeit und/oder Pulver und/oder Granulat ist dabei über die Recheneinheit definierbar, bzw. an die Recheneinheit übertragbar. In diesem Ausführungsbeispiel umfasst der Mechanismus ein Magnetfeld, welches schaltbar ausgeführt ist. Durch ein Aktivieren des Magnetfelds wirkt dieses derart auf den Durchflussmesser (3), insbesondere auf das von ihm umfassten Flügelrad, dass ein weiteres Befördern von Flüssigkeit und/oder Pulver und/oder Granulat durch die Dosiervorrichtung unterbindbar ist. In dieser Ausgestaltung ist das Magnetfeld durch ein drahtlos übertragbares Signal aktivierbar, sodass ein Steuern des Magnetfelds über die Recheneinheit (5) realisierbar ist. Insbesondere beinhaltet in diesem Ausführungsbeispiel das Computerprogrammprodukt Instruktionen, welche beim Erreichen der vorgegebenen Menge an Substanz, insbesondere an Flüssigkeit und/oder Pulver und/oder Granulat ein Signal zum Aktivieren des Magnetfelds aussenden und somit den Portioniervorgang automatisch beenden. Dadurch ist vorteilhaft ein einfaches und präzises, automatisiertes Portionieren und/oder Abmessen eines Volumens an Flüssigkeit und/oder Pulver und/oder Granulat mittels der erfindungsgemäßen Dosiervorrichtung gewährleistet.

Ob die vorgegebene Menge an Substanz erreicht ist, wird dabei durch einen Abgleich des von der Dosiervorrichtung ermittelten Durchflusses mit dem vorgegebenen Wert über die Recheneinheit bestimmt. Dazu wird der ermittelte Durchfluss von der gekoppelten Recheneinheit basierend auf Substanzeigenschaften, welche auf einem der Recheneinheit zugehörigen Speichermedium hinterlegt sind, in ein Volumen und/oder eine Masse umgerechnet. Insbesondere wird in diesem Ausführungsbeispiel das Volumen und/oder die Masse über Substanzeigenschaften wie die Viskosität und/oder die Korngröße und/oder die Substanzdichte und/oder die Schüttdichte bestimmt.

In einem weiteren Ausführungsbeispiel ist der Dosiervorrichtungsauslass (2) der Fig. 1, 2 oder 3 mit einem Filterelement ausgestattet. Dieses Filterelement ist dazu ausgelegt, größere Partikel oder Verunreinigungen aus der Flüssigkeit und/oder dem Pulver und/oder dem Granulat zu entfernen, bevor sie durch den Dosiervorrichtungsauslass (2) gelangen. Dies gewährleistet, dass nur die gewünschte Substanz in das Zielgefäß übertragen wird, wodurch die Qualität und Reinheit der dosierten Substanz verbessert wird.

Gemäß einem weiteren Ausführungsbeispiel ist eine Dosiervorrichtung speziell für den Einsatz in einem chemischen Labor entwickelt, wobei diese der genauen Dosierung von Flüssigkeiten aus einem kippbaren Gefäß (6) dient. Die Dosiervorrichtung weist einen optischen Sensor auf, der an der Unterseite des Einlasses (1) der Dosiervorrichtung positioniert ist und dazu eingerichtet ist, sowohl die Dichte als auch die Viskosität der durchfließenden Flüssigkeit in Echtzeit zu erkennen. Hierzu verwendet der optische Sensor eine Kombination aus Infrarot- und Ultraviolett-Licht, um die spezifischen Eigenschaften der Flüssigkeit zu analysieren. Die Dosiervorrichtung weist eine Kalibrierungseinheit auf, wobei nach jeder erfolgreichen Kalibrierung diese Einheit die neuen Daten in einem internen Speicher der Vorrichtung speichert. Ein kleines Display an der Seite der Dosiervorrichtung (4) zeigt den aktuellen Kalibrierungsstatus und eventuelle Fehlermeldungen an. In diesem speziellen Ausführungsbeispiel ist eine adaptive Kalibrierung vorgesehen, die dazu vorgesehen ist, dass die Dosiervorrichtung bei signifikanten Änderungen der Umgebungsbedingungen, wie z.B. Lichtverhältnisse, automatisch ihre Kalibrierungsparameter anpasst. Hierzu überwacht ein integrierter Temperatursensor die Umgebungstemperatur, um die Messgenauigkeit weiter zu verbessern. Der Einlass (1) der Dosiervorrichtung ist hierin trichterförmig ausgestaltet, um das Einfüllen von Flüssigkeiten zu erleichtern. Ein feinmaschiges Sieb als Filterelement am Einlass (1) verhindert, dass größere Partikel oder Verunreinigungen in die Dosiervorrichtung gelangen. Zudem verhindert ein Überlaufschutz (als Sicherheitsmerkmale), dass zu viel Flüssigkeit in die Dosiervorrichtung gelangt. Bei Erkennen eines unerwarteten Flüssigkeitsflusses oder einer Abweichung von den Kalibrierungsdaten gibt die Dosiervorrichtung einen akustischen Alarm aus und stoppt den Dosierprozess automatisch. In diesem Ausführungsbeispiel ist auch ein Touchscreen-Display (4) vorgesehen, das es dem Benutzer ermöglicht, die gewünschte Menge an Flüssigkeit einzugeben und den Dosierprozess zu überwachen. Über das Display (4) können auch Kalibrierungsprotokolle eingesehen und Einstellungen vorgenommen werden.

Gemäß einem weiteren Ausführungsbeispiel ist eine Dosiervorrichtung speziell für den Einsatz in der Lebensmittelindustrie vorgesehen, wobei diese der genauen Dosierung von Granulaten und Pulvern aus einem kippbaren Behälter (6) dient. Die Dosiervorrichtung weist einen optischen Sensor auf, der direkt über dem Einlass (1) der Dosiervorrichtung positioniert ist. Der optische Sensor verwendet eine spektrale Analysetechnik, um die Größe, Form und Konsistenz der durchfließenden Granulate oder Pulver in Echtzeit zu erkennen. Hierfür ist ein integrierter Laser vorgesehen, der zur genauen (Ab-)Messung der Partikelgröße dient. Die Dosiervorrichtung weist eine Kalibrierungseinheit mit einem internen Speichersystem (5) auf. Dabei speichert das interne Speichersystem (5) die Kalibrierungsdaten für verschiedene Arten von Granulaten und Pulvern. Ein LED-Indikator an der Oberseite der Dosiervorrichtung (4) zeigt den Kalibrierungsstatus und eventuelle Fehlermeldungen an. In diesem Ausführungsbeispiel ist eine adaptive Kalibrierung derart vorgesehen, dass die Dosiervorrichtung ihre Kalibrierungsparameter automatisch anpasst, wenn sie unterschiedliche Granulat- oder Pulverarten erkennt. Ein integrierter Feuchtigkeitssensor stellt sicher, dass die Konsistenz des Pulvers oder Granulats nicht durch Umgebungsfeuchtigkeit beeinträchtigt wird. Der Einlass (1) ist hierin mit einer spiralförmigen Führung ausgestattet, die das gleichmäßige Fließen von Granulaten und Pulvern erleichtert. Ein elektrostatisches Feld am Einlass (1) verhindert das Anhaften von Pulverpartikeln und sorgt so für einen reibungslosen Durchfluss. Darüber erkennt ein Füllstandssensor, wenn der Behälter (6) fast leer ist und gibt einen Alarm aus, um den Nutzer zu informieren. Bei Blockaden oder Verstopfungen stoppt die Dosiervorrichtung den Dosierprozess und gibt einen akustischen Alarm aus. Diese Dosiervorrichtung ist ideal für den Einsatz in der Lebensmittelproduktion, wo die genaue Dosierung von Zutaten entscheidend für die Produktqualität ist. Ihre Sensoren und die adaptive Kalibrierungsfunktion gewährleisten eine präzise Dosierung von Granulaten und Pulvern unter verschiedenen Bedingungen.

### Bezugszeichenliste

- **1**: Einlass
- **2**: Dosiervorrichtungsauslass
- **3**: Durchflussmesser/Zähler
- **4**: Anzeigeeinheit
- **5**: Recheneinheit
- **6**: Kippbares Gefäß

## Patentansprüche

1. **Dosiervorrichtung** zum Abmessen/Portionieren von Substanzen, vorzugsweise Flüssigkeiten und/oder Pulvern und/oder Granulaten, umfassend die folgenden Komponenten:
einen Einlass (1), der als Aufsatz zum Befestigen der Dosiervorrichtung an einem Auslass eines eine zu portionierende Substanz enthaltenden, kippbaren Gefäßes (6) ausgebildet ist, wobei das kippbare Gefäß (6) ein Volumen einer zu portionierenden Substanz enthält, wobei der Aufsatz derart ausgestaltet ist, dass die Dosiervorrichtung dicht mit dem Auslass des kippbaren Gefäßes (6) verbindbar ist,
ein Messgerät zum Bestimmen einer dieses Messgerät durchfließenden Volumens der zu portionierenden Substanz, wobei das Messgerät ein Durchflussmesser (3) und/oder Durchflusszähler (3) ist,
eine Anzeigeeinheit (4), wobei die Anzeigeeinheit (4) derart eingerichtet ist, dass sie eine Menge des Volumens der das Messgerät durchfließenden zu portionierenden Substanz anzeigt,
einen Dosiervorrichtungsauslass (2), wobei der Dosiervorrichtungsauslass (2) aus mehreren gegeneinander verschiebbaren Segmenten, insbesondere aus zumindest drei gegeneinander verschiebbaren Segmenten, ausgebildet ist.

2. Dosiervorrichtung nach Anspruch 1, wobei der Aufsatz zum Befestigen der Dosiervorrichtung am Auslass eines kippbaren Gefäßes (6) austauschbar und/oder in der Größe variabel ist, wobei der Einlass (1) ein Ballonmodul, bevorzugt ein ringförmiges Ballonmodul, aufweist, welches dazu eingerichtet ist, den Einlass (1) der Dosiervorrichtung gegen den Auslass des kippbaren Gefäßes oder gegen die Öffnung eines Behälters, welcher die abzumessende Substanz enthält, abzudichten.

3. Dosiervorrichtung nach Anspruch 1 oder 2, wobei das Messgerät der Dosiervorrichtung einen als ein Flügelrad-Durchflussmesser ausgestaltet ist, wobei bei einem Feststellen des Flügelrades eine Rückstellkraft auf das Flügelrad wirkt, welche dafür sorgt, dass sich in den Kammern des Flügelrades befindliche Flüssigkeit und/oder befindliches Pulver und/oder Granulat über den Einlass der Dosiervorrichtung zurück in das kippbare Gefäß oder den Behälter, in welchem die abzumessende Substanz gelagert ist, befördert wird.

4. Dosiervorrichtung nach einem der Ansprüche 1 bis 3, wobei der Dosiervorrichtungsauslass (2) beweglich ausgestaltet ist, wobei der Dosiervorrichtungsauslass zumindest abschnittsweise aus einem verformbaren Metall gebildet ist.

5. Dosiervorrichtung nach einem der Ansprüche 1 bis 4, wobei eine Ventilvorrichtung zum Unterbinden eines Durchflusses der Substanz in einem Durchflusskanal, welchen die Substanz durchfließt, angeordnet ist, wobei die Ventilvorrichtung derart mit dem Messgerät gekoppelt ist, dass der Durchfluss der Substanz durch die Dosiervorrichtung nach einem Durchfluss eines vorgegebenen Volumens unterbindbar ist.

6. Dosiervorrichtung nach einem der Ansprüche 1 bis 5, wobei das Messgerät mit einem mobilen Endgerät koppelbar ist, wobei das Endgerät derart ausgestaltet ist, dass es die Auswertung von übertragenen Daten, sowie das Ansteuern des Messgeräts zum Einstellen von vorgegebenen Volumina ermöglicht.

7. Dosiervorrichtung nach einem der Ansprüche 1 bis 6, wobei der Dosiervorrichtungsauslass (2) oder der Einlass (1) der Dosiervorrichtung zumindest abschnittsweise aus einem formbaren Material, insbesondere einem Elastomer, gebildet ist.

8. Dosiervorrichtung nach einem der Ansprüche 1 bis 7, wobei der Einlass (1) der Dosiervorrichtung trichterförmig ausgestaltet ist.

9. Dosiervorrichtung nach einem der Ansprüche 1 bis 8, wobei die Dosiervorrichtung über Sensoren verfügt, die den Füllstand der zu dosierenden Substanz im kippbaren Gefäß (6) überwachen und den Benutzer informieren, wenn der Füllstand einen kritischen Wert erreicht.

10. Dosiervorrichtung nach einem der Ansprüche 1 bis 9, wobei die Dosiervorrichtung ein integriertes Heizelement und/oder ein Kühlelement aufweist, das es ermöglicht, die zu dosierende Substanz auf eine gewünschte Temperatur zu bringen oder zu halten.

11. Dosiervorrichtung nach einem der Ansprüche 1 bis 10, wobei die Dosiervorrichtung eine Vibrationseinheit aufweist, die aktiviert wird, um Verklumpungen in der zu dosierenden Substanz, insbesondere Pulvern oder Granulaten, zu verhindern und einen gleichmäßigen Durchfluss zu gewährleisten.

12. Dosiervorrichtung nach einem der Ansprüche 1 bis 11, wobei die Dosiervorrichtung ein integriertes Lesegerät aufweist, das derart eingerichtet ist, dass es Identifikationsinformationen von Tags, die Informationen zu den zu dosierenden Substanzen tragen und die an einem kippbaren Gefäß und/oder an einer zu dosierenden Substanzen angebracht sind, ermittelt.

13. Dosiervorrichtung nach einem der Ansprüche 1 bis 12, wobei das Messgerät basierend auf einem
a) akustischen,
b) gyroskopischen,
c) magnetisch-induktiven,
d) mechanisch-volumetrischen,
e) optischen,
f) thermischen, und/oder
g) Wirkdruck-/Stau-Verfahren basierend den Durchfluss bestimmt.
